(19) Europäisches Patentamt
European Patent Office
Office européen des brevets

(11) **EP 2 537 905 A2**

(12) **EUROPEAN PATENT APPLICATION**

(43) Date of publication:
**26.12.2012 Bulletin 2012/52**

(51) Int Cl.:
*C09J 7/02* (2006.01)   *B32B 15/04* (2006.01)

(21) Application number: **12173199.6**

(22) Date of filing: **22.06.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **23.06.2011 JP 2011139243**
**11.05.2012 JP 2012110074**

(71) Applicant: **Nitto Denko Corporation**
**Osaka 567-8680 (JP)**

(72) Inventors:
• **Nakao, Kota**
**Ibaraki-shi, Osaka 567-8680 (JP)**
• **Daigaku, Noritsugu**
**Ibaraki-shi, Osaka 567-8680 (JP)**
• **Buzojima, Yasushi**
**Ibaraki-shi, Osaka 567-8680 (JP)**
• **Furuta, Yoshihisa**
**Ibaraki-shi, Osaka 567-8680 (JP)**
• **Nonaka, Takahiro**
**Ibaraki-shi, Osaka 567-8680 (JP)**

(74) Representative: **Grünecker, Kinkeldey,**
**Stockmair & Schwanhäusser**
**Leopoldstrasse 4**
**80802 München (DE)**

(54) **Conductive thermosetting adhesive tape**

(57)    Disclosed is a conductive adhesive tape which can exhibit extremely stable electroconductivity upon use over a long duration and/or use under severe environmental conditions even when applied in a small area. The conductive thermosetting adhesive tape includes a metallic foil; and a thermosetting adhesive layer on one side of the metallic foil. The thermosetting adhesive layer has a bond strength before curing of 2 N/20 mm or more and a bond strength after curing of 10 N/20 mm or more. The conductive thermosetting adhesive tape is preferably one including the metallic foil; the thermosetting adhesive layer on one side of the metallic foil; and a terminal exposed from the surface of the thermosetting adhesive layer, in which the conductive thermosetting adhesive tape has a total area of the terminal present per 30 mm$^2$ of the surface of the thermosetting adhesive layer of from 0.1 to 5 mm$^2$.

[Fig.14]

EP 2 537 905 A2

**Description**

Technical Field

The present invention relates to conductive (electroconductive) thermosetting adhesive tapes. More specifically, it relates to conductive thermosetting adhesive tapes typically for electrical conduction between two points separated from each other.

Background Art

Conductive adhesive tapes have electroconductivity (particularly, electroconductivity in the thickness direction) and are used typically for electrical conduction between two points separated from each other and for electromagnetic shielding. Exemplary customary conductive adhesive tapes include conductive pressure-sensitive adhesive tapes each including a metallic foil and a pressure-sensitive adhesive layer (tacky adhesive layer) arranged on one side of the metallic foil, in which a conducting part is provided on a side of the metallic foil covered by the pressure-sensitive adhesive layer, and the conducting part penetrates the pressure-sensitive adhesive layer and has a terminal at the tip thereof (see, for example, Patent Literature (PTL) 1, PTL 2, PTL 3, and PTL 4); and conductive pressure-sensitive adhesive tapes each including a metallic foil, and a pressure-sensitive adhesive layer provided on the metallic foil and including a dispersed conductive filler such as nickel powder (see, for example, PTL 5 and PTL 6).

Electronic appliances have had higher and higher functions and have been used in further various modes recently. With this, conductive adhesive tapes for use in such electronic appliances require stable electroconductivity even when they are used under more severe environmental conditions for a further longer time period. However, the conductive pressure-sensitive adhesive tapes, when used typically in internal wiring of the electronic appliances, suffer from gradually increasing contact resistance of regions where the conductive pressure-sensitive adhesive tapes are affixed, and thus suffer from decrease in electroconductivity with time. Thus, in the present situation, there has not yet been obtained a conductive adhesive tape which can exhibit stable electroconductivity upon use over a long duration and upon use under severe environmental conditions.

Citation List

Patent Literature

PTL 1: Japanese Examined Utility Model Registration Publication No. S63-46980
PTL 2: Japanese Unexamined Patent Application Publication No. H08-185714
PTL 3: Japanese Unexamined Patent Application Publication No. H10-292155
PTL 4: Japanese Unexamined Patent Application Publication No. H11-302615
PTL 5: Japanese Unexamined Patent Application Publication No. 2004-263030
PTL 6: Japanese Unexamined Patent Application Publication No. 2005-277145

Summary of Invention

Technical Problem

Requirements on the stable electroconductivity have recently become rigorous more and more, and the conductive adhesive tapes should have more stable electroconductivity even when they are affixed in a smaller area (smaller applied area).

Accordingly, an object of the present invention is to provide a conductive adhesive tape which can exhibit extremely stable electroconductivity upon use over a long duration and/or use under severe environmental conditions, even when it is applied in a small area.

Solution to Problem

After intensive investigations, the present inventors have found a conductive adhesive tape used for electrical conduction between two points separated from each other, which includes a metallic foil and, present on one side thereof, a thermosetting adhesive layer, in which the thermosetting adhesive layer has a bond strength before curing of 2 N/20 mm or more and a bond strength after curing of 10 N/20 mm or more; and have found that this conductive adhesive tape can serve as a conductive thermosetting adhesive tape capable of exhibiting extremely stable electroconductivity upon use over a long duration and/or use under severe environmental conditions even when it is applied in a small area. The present inventors have also found a conductive thermosetting adhesive tape which includes a metallic foil and, present on one side thereof, a thermosetting adhesive layer, in which the total area of a terminal or terminals present per unit area of the thermosetting adhesive layer is controlled within a specific range; and have found that this conductive thermosetting adhesive tape can serve as a conductive thermosetting adhesive tape capable of exhibiting extremely stable electroconductivity upon use over a long duration and/or use under severe environmental conditions, even when it is applied in a small area. The present invention has been made based on these findings.

Specifically, the present invention provides, in an aspect, a conductive thermosetting adhesive tape which has a metallic foil; and a thermosetting adhesive layer present on or above one side of the metallic foil, in which the thermosetting adhesive layer has a bond strength before curing of 2 N/20 mm or more, and the thermosetting adhesive layer has a bond strength after curing of 10 N/20 mm or more.

The conductive thermosetting adhesive tape is preferably a thermosetting adhesive tape including the metallic foil; the thermosetting adhesive layer present on or above one side of the metallic foil; and a terminal or terminals exposed from a surface of the tape on the thermosetting adhesive layer side, in which the conductive thermosetting adhesive tape has a total area of the terminal or terminals present per 30 mm$^2$ of the surface of the thermosetting adhesive layer of from 0.1 to 5 mm$^2$.

In the conductive thermosetting adhesive tape, the terminal or terminals are preferably a terminal or terminals each formed by boring a through-hole from the metallic foil side to form a fin or fins of the metallic foil on a surface of the tape on the thermosetting adhesive layer side, and folding back the fin or fins.

The conductive thermosetting adhesive tape preferably has an average area of the terminal or terminals of from 50,000 to 500,000 $\mu$m$^2$ per one through-hole.

In the conductive thermosetting adhesive tape, the thermosetting adhesive layer is preferably a thermosetting adhesive layer formed from a thermosetting adhesive composition containing an acrylic polymer (X) as a principal component and further containing an etherified phenolic resin (Y).

In the conductive thermosetting adhesive tape, the acrylic polymer (X) is preferably an acrylic polymer including, as an essential monomer component, a (meth)acrylic alkyl ester (a) whose alkyl moiety being a linear or branched-chain alkyl group having 1 to 14 carbon atoms.

The acrylic polymer (X) in the conductive thermosetting adhesive tape is preferably an acrylic polymer further including a cyano-containing monomer (b) and a carboxyl-containing monomer (c) as essential monomer components.

The thermosetting adhesive layer in the conductive thermosetting adhesive tape is preferably a thermosetting adhesive layer formed from a thermosetting adhesive composition containing a conductive filler.

The present invention provides, in another aspect, a conductive thermosetting adhesive tape which includes a metallic foil; a thermosetting adhesive layer present on or above one side of the metallic foil; and a terminal or terminals exposed from a surface of the tape on the thermosetting adhesive layer side, in which the conductive thermosetting adhesive tape has a total area of the terminal or terminals present per 30 mm$^2$ of the surface of the thermosetting adhesive layer of from 0.1 to 5 mm$^2$.

The terminal or terminals in the conductive thermosetting adhesive tape are preferably a terminal or terminals each formed by boring a through-hole from the metallic foil side to form a fin or fins of the metallic foil on a surface of the tape on the thermosetting adhesive layer side, and folding back the fin or fins.

The conductive thermosetting adhesive tape preferably has an average area of the terminal or terminals of from 50,000 to 500,000 $\mu$m$^2$ per one through-hole.

The thermosetting adhesive layer in the conductive thermosetting adhesive tape is preferably a thermosetting adhesive layer formed from a thermosetting adhesive composition containing an acrylic polymer (X) as a principal component and further containing an etherified phenolic resin (Y).

The acrylic polymer (X) in the conductive thermosetting adhesive tape is preferably an acrylic polymer including, as an essential monomer component, a (meth)acrylic alkyl ester (a) whose alkyl moiety being a linear or branched-chain alkyl group having 1 to 14 carbon atoms.

The acrylic polymer (X) in the conductive thermosetting adhesive tape is preferably an acrylic polymer further including a cyano-containing monomer (b) and a carboxyl-containing monomer (c) as essential monomer components.

The thermosetting adhesive layer in the conductive thermosetting adhesive tape is preferably a thermosetting adhesive layer formed from a thermosetting adhesive composition containing a conductive filler.

Advantageous Effects of Invention

The conductive thermosetting adhesive tapes according to embodiments of the present invention can exhibit extremely stable electroconductivity even upon use over a long duration and/or use under severe environmental conditions even when they are applied in a small area.

These and other objects, features, and advantages of the present invention will be more fully understood from the following description of embodiments with reference to the attached drawings. All numbers are herein assumed to be modified by the term "about."

Brief Description of Drawings

Fig. 1 is a schematic view illustrating an exemplary testing substrate for use in thermo-cycle tests of conductive thermosetting adhesive tapes according to the present invention;

Fig. 2 is a schematic view illustrating an equivalent circuit of an electric circuit in the testing substrate for use in the thermo-cycle tests of the conductive thermosetting adhesive tapes according to the present invention;

Fig. 3 is a schematic view (cross-sectional view of an affixed region 13 of Fig. 1) illustrating an exemplary resistance-testing sample for use in the thermo-cycle tests of the conductive thermosetting adhesive tapes according to the present invention;

Fig. 4 is a view illustrating a profile of a temperature setting (thermo-cycle condition) in the first and second cycles in the thermo-cycle tests of the conductive thermosetting adhesive tapes according to the present invention;

Fig. 5 is a view partially illustrating exemplary profiles of an ambient temperature in the chamber (in-chamber temperature) and of a surface temperature of a conductive thermosetting adhesive tape (tape temperature) measured in thermo-cycle tests in working examples;

Fig. 6 is a schematic view (cross-sectional view at a terminal) illustrating a conductive thermosetting adhesive tape according to an embodiment of the present invention (conductive thermosetting adhesive tape "a");

Fig. 7 is a schematic view (plan view) illustrating the conductive thermosetting adhesive tape according to the present invention (conductive thermosetting adhesive tape "a") ;

Fig. 8 is a schematic view partially illustrating an exemplary production method of the conductive thermosetting adhesive tape according to the present invention (conductive thermosetting adhesive tape "a");

Fig. 9 is a schematic view (plan view) illustrating an exemplary pin for use in the production of the conductive thermosetting adhesive tape according to the present invention (conductive thermosetting adhesive tape "a");

Fig. 10 is a schematic view (side view) illustrating the exemplary pin for use in the production of the conductive thermosetting adhesive tape according to the present invention (conductive thermosetting adhesive tape "a") ;

Fig. 11 is a schematic view (plan view) partially illustrating an exemplary arrangement of pins for use in the production of the conductive thermosetting adhesive tape according to the present invention (conductive thermosetting adhesive tape "a");

Fig. 12 is a schematic view (cross-sectional view) illustrating an exemplary cylindrical concavity formed in the surface of a negative die for use in the production of the conductive thermosetting adhesive tape according to the present invention (conductive thermosetting adhesive tape "a") ;

Fig. 13 is a schematic view (cross-sectional view) illustrating how an alignment between a pin and a cylindrical concavity be upon punching (formation of a through-hole) using a positive die and a negative die in the production of the conductive thermosetting adhesive tape according to the present invention (conductive thermosetting adhesive tape "a");

Fig. 14 is a schematic view illustrating an exemplary shape of fins upon the formation of a through-hole using a positive die having a rhombic quadrangular pyramidal pin, and a negative die having a cylindrical concavity in Step 1 of the production method of the conductive thermosetting adhesive tape according to the present invention (conductive thermosetting adhesive tape "a");

Fig. 15 depicts schematic views illustrating an embodiment of the formation of a terminal by folding back a fin with a squeegee in Step 2 of the production method of the conductive thermosetting adhesive tape according to the present invention (conductive thermosetting adhesive tape "a");

Fig. 16 depicts schematic views illustrating an exemplary formation of a terminal by press-working a fin in a production method of a customary conductive adhesive tape; and

Fig. 17 is a schematic view (plan view) illustrating a testing substrate for use in the thermo-cycle tests in the working examples.

Description of Embodiments

Conductive thermosetting adhesive tapes according to embodiments of the present invention are single-coated adhesive tapes each including a metallic foil and, arranged on one side thereof, a thermosetting adhesive layer. The conductive thermosetting adhesive tapes according to the present invention are usable for electrical conduction between two points separated from each other. As used herein the term "conductive thermosetting adhesive tape(s)" also includes those in the form of a sheet, namely, "conductive thermosetting adhesive sheet(s)."

The conductive thermosetting adhesive tapes according to the present invention have a maximum resistance in the first cycle of preferably 0.03 Ω or less, more preferably from 0.0001 to 0.01 Ω, and furthermore preferably from 0.0001 to 0.008 Ω, as measured in a thermo-cycle test mentioned later. The conductive thermosetting adhesive tapes, when having a maximum resistance in the first cycle of 0.03 Ω or less, can exhibit sufficient electroconductivity as conductive thermosetting adhesive tapes. The term "maximum resistance in the first cycle" is also referred to as an "initial resistance."

The conductive thermosetting adhesive tapes according to the present invention have a maximum resistance in the 200th cycle of preferably 0.03 Ω or less, more preferably from 0.0001 to 0.01 Ω, and furthermore preferably from 0.0001 to 0.008 Ω, as measured in the after-mentioned thermo-cycle test. The conductive thermosetting adhesive tapes, when having a maximum resistance in the 200th cycle of 0.03 Ω or less, can exhibit sufficient electroconductivity as conductive thermosetting adhesive tapes. The "maximum resistance in the 200th cycle" is also referred to as a "200-cycle resistance."

The conductive thermosetting adhesive tapes according to the present invention have a maximum resistance in the 400th cycle of preferably 0.03 Ω or less, more preferably from 0.0001 to 0.01 Ω, and furthermore preferably from 0.0001 to 0.008 Ω, as measured in the thermo-cycle test. The conductive thermosetting adhesive tapes, when having a maximum resistance in the 400th cycle of 0.03 Ω or less, can exhibit sufficient electroconductivity as conductive thermosetting adhesive tapes. The "maximum resistance in the 400th cycle" is also referred to as a "400-cycle resistance."

Though not critical, the conductive thermosetting adhesive tapes according to the present invention have a ratio of the maximum resistance in the 200th cycle to the maximum resistance in the first cycle (initial resistance) of preferably 2 times or less (e.g., from 1 to 2 times), more preferably from 1 to 1.8 times, and furthermore preferably from 1 to 1.6 times, as measured in the thermo-cycle test. As used herein the term "ratio of the maximum resistance in the 200th cycle to the maximum resistance in the first cycle" [(maximum resistance in the 200th cycle)/(maximum resistance in the first cycle)] (time) is also referred to as a "resistance ratio (200-cycle)."

Though not critical, the conductive thermosetting adhesive tapes according to the present invention have a ratio of the maximum resistance in the 400th cycle to the maximum resistance in the first cycle (initial resistance) of preferably 2 times or less (e.g., from 1 to 2 times), more preferably from 1 to 1.8 times, and furthermore preferably from 1 to 1.6 times, as measured in the thermo-cycle test. As used herein the "ratio of the maximum resistance in the 400th cycle to the maximum resistance in the first cycle" [(maximum resistance in the 400th cycle)/(maximum resistance in the first cycle)] (time) is also referred to as a "resistance ratio (400-cycle)."

The resistance ratios (e.g., the resistance ratio (200-cycle) and resistance ratio (400-cycle)) serve as indices indicating to which extent a conductive thermosetting adhesive tape exhibits stable electroconductivity when the conductive thermosetting adhesive tape is applied in a small area and is used over a long duration and/or used under severe environmental conditions. The conductive thermosetting adhesive tape, when having a small resistance ratio of 2 times or less, allows a product using the tape to exhibit high reliability. This is probably because such conductive thermosetting adhesive tape is resistant to decrease in electroconductivity with time in a region where it is affixed, and this allows extremely stable flow of a current continuously even when the tape is used over a long duration and/or used under severe environmental conditions. In contrast, a conductive thermosetting adhesive tape having a resistance ratio of much more than 2 times may give a product having insufficient reliability. This is because such conductive thermosetting adhesive tape may suffer from decrease in electroconductivity with time in a region where it is affixed, and this may cause abrupt increase in resistance and defective continuity particularly when the tape is used under severe environmental conditions over a long duration.

The thermo-cycle test is performed in the following manner. A sample conductive thermosetting adhesive tape is affixed to a silver-plated conductor trace on a substrate to form an electric circuit to thereby yield a testing substrate having the electric circuit. The testing substrate is exposed to an ambient temperature environment in which the temperature is periodically lowered and raised while applying a constant electric current to the electric circuit. During this process, the resistance between the metallic foil of the conductive thermosetting adhesive tape and the silver-plated conductor trace is continuously measured. Specifically, the contact resistance of a region (affixed region) where the conductive thermosetting adhesive tape and the silver-plated conductor trace are bonded with each other is continuously measured.

The maximum resistance in the first cycle, the maximum resistance in the 200th cycle, and the maximum resistance in the 400th cycle may be measured in the following manner. A sample conductive thermosetting adhesive tape is laminated onto a silver plating (silver-plated conductor trace) at 130°C so as to have a size of the affixed region of 2 mm wide by 3 mm long (area: 6 mm$^2$), bonded thereto through thermocompression bonding at 160°C and 2 MPa for 120 seconds, further thermally cured at 150°C for 30 minutes, and a constant current of 2 A is applied to the conductive thermosetting adhesive tape and the silver plating (silver-plated conductor trace) including the affixed region. This is placed in a thermostatic chamber, cooled and heated in repeated cycles, and during this process, the resistance (contact resistance) of the affixed region is continuously measured. The thermostatic chamber is preset so as to repeat thermo-cycles. In one cycle of thermo-cycles, the temperature in the chamber (thermo-cycle condition) is set so that the temperature is lowered from 25°C to -40°C, held at -40°C for 10 minutes, raised to 85°C, held at 85°C for 10 minutes, and again lowered to 25°C. More specifically, the above values may be measured according to a technique described in the following [Thermo-cycle Test]. The affixed region (affixed region of a size of 2 mm wide by 3 mm long (area: 6 mm$^2$)) in the sample conductive thermosetting adhesive tape includes a terminal or terminals and preferably includes one terminal.

[Thermo-cycle Test]

Preparation of Testing Substrate

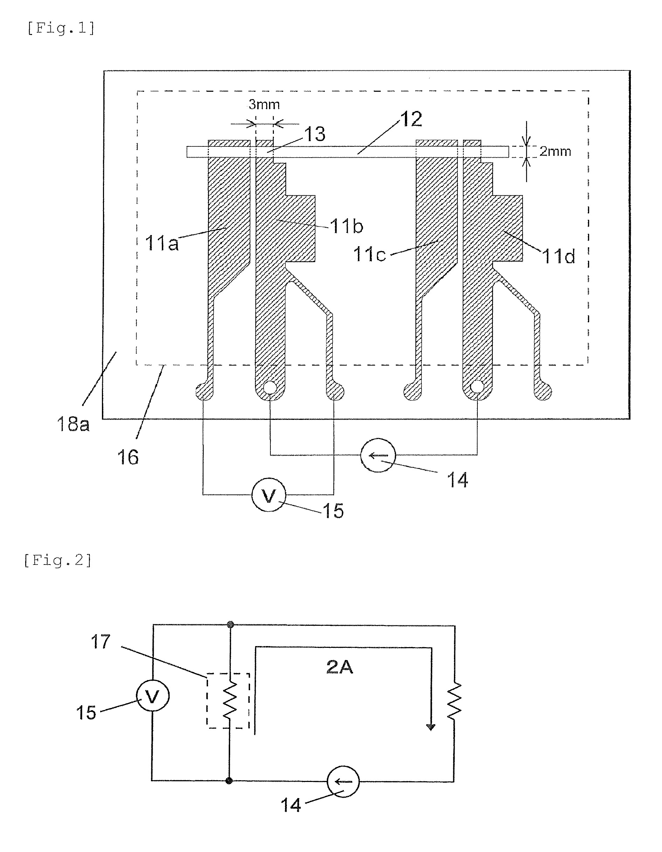

A testing substrate is prepared by preparing a glass epoxy substrate bearing silver-plated conductor traces thereon, applying a sample conductive thermosetting adhesive tape to the silver-plated conductor traces, and connecting a constant-current power supply and an electrometer to the silver-plated conductor traces. Fig. 1 illustrates an exemplary specific arrangement of the testing substrate. Initially, a glass epoxy substrate 18a bearing thereon silver-plated conductor traces (hereinafter also simply referred to as "conductor traces") 11a, 11b, 11c, and 11d is prepared. A conductive thermosetting adhesive tape 12 (width: 2 mm) is laminated onto the conductor traces 11a to 11d at 130°C and bonded thereto through thermocompression bonding at 160°C and 2 MPa for 120 seconds. The lamination is performed so that an affixed region 13 between the conductor trace 11b and the conductive thermosetting adhesive tape has a size of 2 mm wide by 3 mm long (area: 6 mm$^2$). The affixed region 13 ensures the electrical conduction (electrical conduction in the thickness direction) between the conductor trace 11b and the metallic foil of the conductive thermosetting adhesive tape 12.
For the evaluation, the conductive thermosetting adhesive tape, when having a width of less than 2 mm, is applied so as to have a total width of 2 mm. Typically, when the conductive thermosetting adhesive tape has a width of 1 mm, two plies of the conductive thermosetting adhesive tape may be applied in parallel.
Next, the conductor traces 11b and 11d are connected to a constant-current power supply 14, whereas the conductor traces 11a and 11b are connected to an electrometer 15, to form an electric circuit to thereby prepare a testing substrate. Though not limited, the conductor traces may be connected to the constant-current power supply or to the electrometer by common connecting means such as a lead wire or soldering. Fig. 2 illustrates an equivalent circuit for the electric circuit in the testing substrate illustrated in Fig. 1. The reference sign 17 in Fig. 2 represents a resistance (contact resistance) of the affixed region 13 in Fig. 1.

Preparation of Resistance Testing Sample

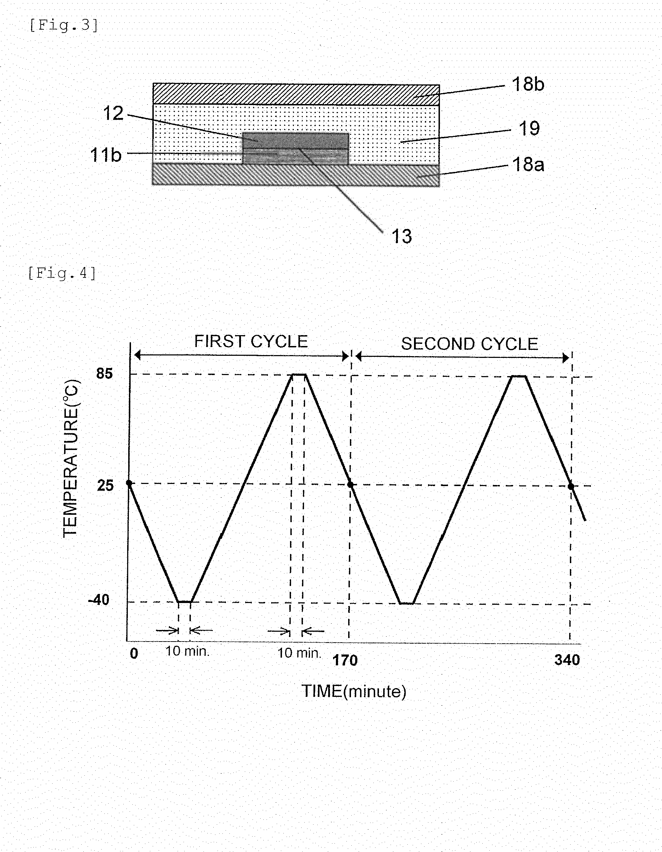

A resistance-testing sample is prepared by placing a glass plate on the testing substrate, and sealing at least the affixed region in the electric circuit of the testing substrate with an ethylene-vinyl acetate copolymer (EVA), in which the sealing is performed between the glass epoxy substrate and the glass plate. The affixed region is a region where the conductor trace and the conductive thermosetting adhesive tape are affixed to each other. Fig. 3 depicts a schematic view (cross-sectional view at the affixed region 13 in Fig. 1) of the resistance-testing sample. In the resistance-testing sample, at least the affixed region 13 of the conductor trace 11b with the conductive thermosetting adhesive tape 12 is sealed with an EVA (cured article of EVA) 19 between the glass epoxy substrate 18a and the glass plate 18b. Fig. 1 illustrates an exemplary sealing region 16 which is a region to be sealed with the EVA (cured article of EVA). Though not limited, the sealing with the EVA may be performed typically in the following manner. Specifically, a film of a thermosetting ethylene-vinyl acetate copolymer (EVA film) is placed on the sealing region 16 in the testing substrate illustrated in Fig. 1, and a glass plate is further placed thereon to give a laminate having a structure of "(testing substrate)/(EVA film)/(glass plate)." The EVA film may for example be a thermosetting EVA film having a vinyl acetate content of 28%. The laminate is placed in a vacuum pressing machine, in which evacuation is initially performed at 150°C for 40 seconds without pressing, the laminate in this state with evacuation is pressed at a temperature of 150°C and a pressure of 0.1 MPa for 400 seconds, but the evacuation is completed 400 seconds from the beginning of the evacuation. The laminate is then retrieved from the vacuum pressing machine and heated at 150°C for 30 minutes to thermally cure the thermosetting adhesive layer and EVA.
Thus, the affixed region is fixed by sealing, with the EVA, at least the affixed region between the conductor trace and the conductive thermosetting adhesive tape. This gives stable measurement results with small errors.
Setting of Ambient Temperature in Chamber (Thermostatic Chamber)
The temperature in the chamber (in-chamber temperature; thermo-cycle condition) is set as follows. Though not critical, the humidity (relative humidity) in the chamber is not required to be controlled during the ambient temperature in the chamber is changed in accordance with the setting below.
The temperature is 25°C at the start, lowered from 25°C to -40°C at a rate of 100°C/hour, and held at -40°C for 10 minutes. Next, the temperature is raised from -40°C to 85°C at a rate of 100°C/hour, and held at 85°C for 10 minutes.

Then, the temperature is lowered to 25°C at a rate of 100°C/hour. Such thermo-cycle condition is regarded as one cycle, and repeated at least 200 times or at least 400 times. One cycle needs 170 minutes. Fig. 4 illustrates a profile of the temperature setting (thermo-cycle condition) of the first and second cycles in the chamber. This temperature setting (thermo-cycle condition) is in accordance with IEC Standards, IEC 61215 (the second edition) and IEC 61646 (the second edition).

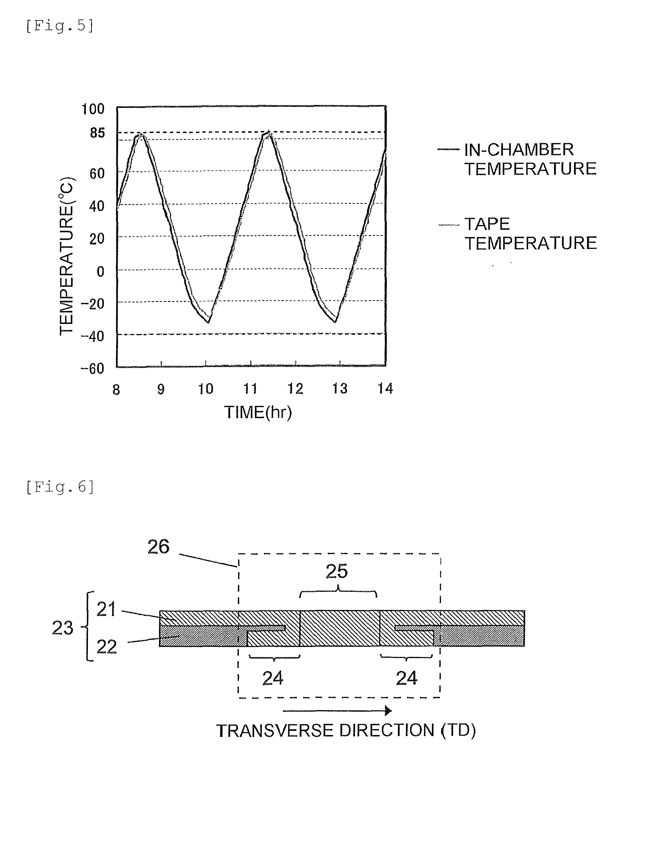

The chamber (thermostatic chamber) may be a known or common chamber. Examples of the chamber include, but are not limited to, commercially available products such as trade name "PL-3KP" (supplied by ESPEC Corporation) and trade name "PWL-3KP" (supplied by ESPEC Corporation). Fig. 5 illustrates an exemplary profile of the in-chamber temperature (in-chamber ambient temperature) of a chamber (thermostatic chamber) and an exemplary profile of the surface temperature of the conductive thermosetting adhesive tape in the testing substrate when the temperature of the chamber (trade name "PL-3KP" supplied by ESPEC Corporation) is controlled according to the setting. The chamber herein is used in evaluation of "(1) Resistance (Thermo-cycle Test)" mentioned later. The in-chamber temperature of the chamber varies with the setting condition, in which the highest temperature is about 85°C substantially the same with the setting, and the lowest temperature is about -30°C somewhat higher than the setting. The surface temperature of the conductive thermosetting adhesive tape varies substantially in the same manner as with the in-chamber temperature of the chamber.

Measurement of Resistance

To the electric circuit in the resistance-testing sample, a constant current of 2 A is applied by a constant current power supply (the constant current power supply 14 in Fig. 1) (namely, a constant current of 2 A is applied to the affixed region 13 in Fig. 1), and the resistance-testing sample is placed in the chamber at an ambient temperature of 25°C. Next, the resistance-testing sample is repeatedly cooled and heated in accordance with the temperature setting above (thermo-cycle condition). During the cycles, the electrical voltage is continuously measured (for example, at a sampling interval of 5 to 10 times/10 minutes) with the electrometer 15 to continuously collect the resistance of the affixed region 13. Thus, the maximum resistance in the first cycle (initial resistance), the maximum resistance in the 200th cycle, and the maximum resistance in the 400th cycle are determined to calculate the resistance ratios.

According to customary techniques, how stably a conductive adhesive tape (e.g., a conductive pressure-sensitive adhesive tape) exhibits electroconductivity is evaluated in the following manner. The conductive adhesive tape is affixed to a conductor (electroconductor), the resulting article is exposed to an ambient temperature environment in which a high temperature and a low temperature are repeated alternately while ensuring electrical conduction between the conductor and a metallic foil of the conductive adhesive tape, and how much the electroconductivity (i.e., resistance (contact resistance)) of the affixed region in the conductive adhesive tape varies before and after the exposure is examined and evaluated. However, this evaluation technique does not reveal whether the conductive adhesive tape exhibits electroconductivity always stably during exposure to such high-temperature and/or low-temperature condition, because the change in electroconductivity between before and after exposure to the ambient temperature environment is evaluated by comparing a resistance of the sample measured at room temperature before exposure with a resistance of the sample measured at room temperature after exposure. In consideration of these, the present inventors have employed the aforementioned thermo-cycle test for the evaluation of electroconductivity of a conductive adhesive tape, in which the resistance (contact resistance) of the affixed region of the conductive adhesive tape is continuously measured even during exposure to such a high-temperature and low-temperature condition. As a result, the present inventors have found that customary conductive adhesive tapes have a gradually increasing resistance and thereby exhibits decreasing electroconductivity with time particularly in a high-temperature environment, although the tapes have a small increase in resistance with time when the resistance is measured in a room temperature environment. In contrast, the conductive thermosetting adhesive tapes according to the present invention, when having a resistance ratio measured in the thermo-cycle test of 2 times or less, suffer from less increase in resistance measured in a high-temperature environment and can exhibit extremely stable electroconductivity even when used over a long duration and/or used under severe environmental conditions. In addition, even when applied in a small area typically of 2 mm wide by 3 mm long (area: 6 mm$^2$), the conductive thermosetting adhesive tapes can exhibit extremely stable electroconductivity when used over a long duration and/or used under severe environmental conditions.

Metallic Foil

The metallic foil constituting the conductive thermosetting adhesive tapes according to the present invention may be any metallic foil that can support by itself and has electroconductivity. Examples of usable metallic foils include metallic foils made typically of copper, aluminum, nickel, silver, iron, lead, or an alloy of them. Among them, an aluminum foil and a copper foil are preferred, of which a copper foil is more preferred, from the viewpoints of electroconductivity, cost, and workability. The metallic foils may have undergone various surface treatments such as tin plating, silver plating, and gold plating. Specifically, in order to prevent the reduction of electroconductivity due to corrosion, the metallic foil is particularly preferably a copper foil coated by tin plating (tin-plated copper foil).

Though not critical, the metallic foil has a thickness of typically preferably from 10 to 100 $\mu$m, more preferably from 20 to 80 $\mu$m, and furthermore preferably from 30 to 60 $\mu$m. The metallic foil, when having a thickness of 10 $\mu$m or more, may have a sufficient strength to contribute to more satisfactory workability. In contrast, the metallic foil, when having a thickness of 100 $\mu$m or less, may be advantageous in cost. When the conductive thermosetting adhesive tape is a conductive thermosetting adhesive tape having through-holes (conductive thermosetting adhesive tape "a") as mentioned later, the metallic foil, when having a thickness of 100 $\mu$m or less, may help the through-holes to be formed easily and thereby helps the conductive thermosetting adhesive tape to be produced with more satisfactory productivity.

Thermosetting Adhesive Layer

The thermosetting adhesive layer constituting a conductive thermosetting adhesive tape according to an embodiment of the present invention has a bond strength before curing of 2 h1/20 mm or more, preferably 2.5 N/20 mm or more, and more preferably 3 N/20 mm or more. The conductive thermosetting adhesive tape according to the present invention, as having a bond strength before curing of 2 N/20 mm or more, can be temporarily fixed to an adherend. Though not critical, the upper limit of the bond strength before curing is preferably 15 N/20 mm and more preferably 20 N/20 mm. As used herein the term "bond strength before curing" refers to a bond strength of the thermosetting adhesive layer before a heat curing treatment (heating treatment at 150°C for 35 minutes). The term "bond strength before curing" is herein also referred to as "initial bond strength."

The thermosetting adhesive layer constituting the conductive thermosetting adhesive tape according to the present invention has a bond strength after curing of 10 N/20 mm or more, preferably 12 N/20 mm or more, and more preferably 15 N/20 mm or more. The conductive thermosetting adhesive tape according to the present invention, as having a bond strength after curing of 10 N/20 mm or more, can be bonded firmly to an adherend and can exhibit extremely stable electroconductivity when used over a long duration and/or used in a severe environment. Though not critical, the upper limit of the bond strength after curing is preferably 70 N/20 mm and more preferably 50 N/20 mm. As used herein the term "bond strength after curing" refers to a bond strength of the thermosetting adhesive layer after a heat curing treatment (heating treatment at 150°C for 35 minutes) is applied to the thermosetting adhesive layer.

An adhesive for the formation of the thermosetting adhesive layer constituting the conductive thermosetting adhesive tape according to the present invention is not limited in type and includes known adhesives such as acrylic adhesives, rubber adhesives, vinyl alkyl ether adhesives, silicone adhesives, polyester adhesives, polyamide adhesives, urethane adhesives, fluorocarbon adhesives, and epoxy adhesives. Each of different adhesives may be used alone or in combination.

Among them, acrylic adhesives are preferred as the adhesive for the formation of the thermosetting adhesive layer. Specifically, the conductive thermosetting adhesive tape according to the present invention is preferably a conductive thermosetting acrylic adhesive tape having a thermosetting acrylic adhesive layer.

The thermosetting acrylic adhesive layer is preferably formed from a thermosetting acrylic adhesive composition containing an acrylic polymer (X) as a principal component and further containing a thermosetting resin. Where necessary, the thermosetting acrylic adhesive composition may further contain any of additional components (additives) in addition to the acrylic polymer (X) and the thermosetting resin.

As used herein the phrase "containing an (the) acrylic polymer (X) as a principal component" means that the content of the acrylic polymer (X) is 30 percent by weight or more based on the total solids content (100 percent by weight) of the thermosetting acrylic adhesive composition.

Though not limited, the acrylic polymer (X) is preferably an acrylic polymer which includes (or is formed from) a (meth)acrylic alkyl ester (a) whose alkyl moiety being a linear or branched-chain alkyl group having 1 to 14 carbon atoms as an essential monomer component. The "meth)acrylic alkyl ester (a) whose alkyl moiety being a linear or branched-chain alkyl group having 1 to 14 carbon atoms" herein is also referred to as "(meth)acrylic $C_1$-$C_{14}$ alkyl ester (a)" or simply referred to as "(meth)acrylic alkyl ester (a)." If As used herein the term "(meth)acrylic" means "acrylic" and/or "ethacrylic" (either one or both of "acrylic" and "methacrylic," and the same is true for other descriptions.

The acrylic polymer (X) is particularly preferably an acrylic polymer including the (meth)acrylic $C_1$-$C_{14}$ alkyl ester (a), a cyano-containing monomer (b), and a carboxyl-containing monomer (c) as essential monomer components. Above all, the acrylic polymer (X) is preferably constituted by monomer components containing the (meth)acrylic $C_1$-$C_{14}$ alkyl ester (a) in a content of from 50 to 95 percent by weight, the cyano-containing monomer (b) in a content of from 9 to 49.5 percent by weight, and the carboxyl-containing monomer (c) in a content of from 0.3 to 10 percent by weight, based on the total amount (100 percent by weight) of the monomer components. The monomer components constituting the acrylic polymer (X) may further contain any of additional monomer components (additional monomer components), in addition to the (meth)acrylic $C_1$-$C_{14}$ alkyl ester (a), the cyano-containing monomer (b), and the carboxyl-containing monomer (c). Each of different acrylic polymers (X) may be used alone or in combination.

The acrylic polymer (X) is preferably an acrylic polymer (acrylic elastomer) which exhibits rubber elasticity (elastomer function).

Examples of the (meth)acrylic $C_1$-$C_{14}$ alkyl ester (a) include, but are not limited to, methyl (meth)acrylate, ethyl (meth)acrylate, propyl (meth)acrylate, isopropyl (meth)acrylate, n-butyl (meth)acrylate, isobutyl (meth)acrylate, s-butyl (meth)acrylate, t-butyl (meth)acrylate, pentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, and tetradecyl (meth)acrylate. Among them, (meth)acrylic alkyl esters whose alkyl moiety being a linear or branched-chain alkyl group having 4 to 12 carbon atoms ((meth)acrylic $C_4$-$C_{12}$ alkyl esters) are preferred, of which n-butyl acrylate is more preferred. Each of different (meth)acrylic $C_1$-$C_{14}$ alkyl esters (a) may be used alone or in combination.

Though not critical, the content (percentage content) of the (meth)acrylic $C_1$-$C_{14}$ alkyl ester (a) in monomer components constituting the acrylic polymer (X) is preferably 50 percent by weight or more, more preferably from 50 to 95 percent by weight, furthermore preferably from 50 to 90 percent by weight, still more preferably from 55 to 75 percent by weight, and most preferably from 60 to 72 percent by weight, based on the total amount (100 percent by weight) of monomer components constituting the acrylic polymer (X). This range is preferred for a good bond strength of the thermosetting acrylic adhesive layer.

The cyano-containing monomer (b) is a monomer having a cyano group, and examples thereof include, but are not limited to, acrylonitrile and methacrylonitrile. Among them, acrylonitrile is preferred. Each of different cyano-containing monomers (b) may be used alone or in combination. The cyano-containing monomer (b), when used, helps the thermosetting acrylic adhesive layer to have a higher strength (bulk strength) and is preferred upon use over a long duration and/or use under severe environmental conditions.

The content of the cyano-containing monomer (b) in monomer components constituting the acrylic polymer (X) is preferably from 1 to 50 percent by weight based on the total amount (100 percent by weight) of monomer components constituting the acrylic polymer (X). The lower limit of the content of the cyano-containing monomer (b) is preferably 1 percent by weight, more preferably 5 percent by weight, furthermore preferably 9 percent by weight, still more preferably 24 percent by weight, and most preferably 26 percent by weight. In contrast, the upper limit of the content of the cyano-containing monomer (b) is preferably 50 percent by weight, more preferably 49.5 percent by weight, furthermore preferably 40 percent by weight, still more preferably 35 percent by weight, and most preferably 30 percent by weight. The content of the cyano-containing monomer (b) is particularly preferably from 5 to 30 percent by weight. The cyano-containing monomer (b), when contained in a content of 5 percent by weight or more, may help the thermosetting acrylic adhesive layer to have a further higher strength (bulk strength), thus being desirable. In contrast, the cyano-containing monomer (b), if contained in a content of more than 49.5 percent by weight, may cause the thermosetting acrylic adhesive layer to have a lower bond strength.

The carboxyl-containing monomer (c) is a monomer having a carboxyl group, and examples thereof include, but are not limited to, acrylic acid, methacrylic acid, itaconic acid, maleic acid, fumaric acid, and crotonic acid; and acid anhydrides of these carboxyl-containing monomers, such as maleic anhydride, itaconic anhydride, and other acid-anhydride-containing monomers. Among them, acrylic acid, methacrylic acid, and itaconic acid are preferred, of which acrylic acid is particularly preferred. Each of different carboxyl-containing monomers (c) may be used alone or in combination. The carboxyl-containing monomer (c), when used, helps the conductive thermosetting adhesive tape according to the present invention to have a higher bond strength, thus being desirable.

The content of the carboxyl-containing monomer (c) in the monomer components constituting the acrylic polymer (X) is preferably from 0.3 to 10 percent by weight, more preferably from 0.5 to 8 percent by weight, and furthermore preferably from 1 to 6 percent by weight, based on the total amount (100 percent by weight) of the monomer components constituting the acrylic polymer (X). The carboxyl-containing monomer (c), when contained in a content of 0.5 percent by weight or more, may help the thermosetting acrylic adhesive layer to have a higher bond strength, thus being desirable. In contrast, the carboxyl-containing monomer (c), if contained in a content of more than 10 percent by weight, may cause the thermosetting acrylic adhesive layer to have a lower bond strength.

The monomer components constituting the acrylic polymer (X) may further contain any of additional monomer components (copolymerizable monomers) in addition to the (meth)acrylic $C_1$-$C_{14}$ alkyl ester (a), the cyano-containing monomer (b), and the carboxyl-containing monomer (c). Each of different additional monomer components (copolymerizable monomers) may be used alone or in combination. Examples of the additional monomer components (copolymerizable monomers) include (meth)acrylic alkyl esters whose alkyl moiety being a linear or branched-chain alkyl group having 15 to 20 carbon atoms ((meth)acrylic $C_{15}$-$C_{20}$ alkyl esters), such as pentadecyl (meth)acrylate, hexadecyl (meth)acrylate, heptadecyl (meth)acrylate, octadecyl (meth)acrylate, nonadecyl (meth)acrylate, and eicosyl (meth)acrylate; nonaromatic-ring-containing (meth)acrylic esters such as cycloalkyl (meth)acrylates [e.g., cyclohexyl (meth)acrylate] and isobornyl (meth)acrylate; aromatic-ring-containing (meth)acrylic esters such as (meth)acrylic aryl esters [e.g., phenyl (meth)acrylate], (meth)acrylic aryloxyalkyl esters [e.g., phenoxyethyl (meth)acrylate], and (meth)acrylic arylalkyl esters [e.g., benzyl (meth)acrylate]; epoxy-containing acrylic monomers such as glycidyl (meth)acrylate and methylglycidyl (meth)acrylate; vinyl ester monomers such as vinyl acetate and vinyl propionate; styrenic monomers such as styrene and $\alpha$-methylstyrene; hydroxyl-containing monomers such as hydroxyethyl (meth)acrylate, hydroxypropyl (meth)acrylate, and hydroxybutyl (meth)acrylate; alkoxyalkyl (meth)acrylate monomers such as methoxyethyl (meth)acrylate and ethoxyethyl (meth)acrylate; aminoalkyl (meth)acrylate monomers such as aminoethyl (meth)acrylate, N,N-dimethylaminoethyl (meth)acrylate, and t-butylaminoethyl (meth)acrylate; (N-substituted) amide monomers such as (meth)acrylamide, N,N-dimethyl(meth)acrylamide, N-butyl(meth)acrylamide, and N-hydroxy(meth)acrylamide; olefinic monomers such as ethylene, propylene, isoprene, and butadiene; and vinyl ether monomers such as methyl vinyl ether.

Examples of the additional monomer components (copolymerizable monomers) further include multifunctional monomers such as hexanediol di(meth)acrylate, butanediol di(meth)acrylate, (poly)ethylene glycol di(meth)acrylate, (poly)propylene glycol di(meth)acrylate, neopentyl glycol di(meth)acrylate, pentaerythritol di(meth)acrylate, glycerol di(meth)acrylate, trimethylolpropane tri(meth)acrylate, pentaerythritol tri(meth)acrylate, dipentaerythritol hexa(meth)acrylate, and divinylbenzene.

In other words, the acrylic polymer (X) is preferably an acrylic polymer including at least constitutional units derived from the (meth)acrylic $C_1$-$C_{14}$ alkyl ester (a), constitutional units derived from the cyano-containing monomer (b), and constitutional units derived from the carboxyl-containing monomer (c). The respective constitutional units may each be composed of a unit of one type or units of two or more types. In the acrylic polymer (X) (100 percent by weight), the content of constitutional units derived from the (meth)acrylic $C_1$-$C_{14}$ alkyl ester (a) is preferably 50 percent by weight or more, more preferably from 50 to 95 percent by weight, furthermore preferably from 50 to 90 percent by weight, still more preferably from 55 to 75 percent by weight, and most preferably from 60 to 72 percent by weight. The content of constitutional units derived from the cyano-containing monomer (b) is preferably from 9 to 49.5 percent by weight, more preferably from 24 to 40 percent by weight, and furthermore preferably from 26 to 35 percent by weight. The content of constitutional units derived from the carboxyl-containing monomer (c) is preferably from 0.3 to 10 percent by weight, more preferably from 0.5 to 8 percent by weight, and furthermore preferably from 1 to 6 percent by weight.

The acrylic polymer (X) may be prepared according to a known or customary polymerization technique such as solution polymerization, emulsion polymerization, suspension polymerization, bulk polymerization, or polymerization through irradiation with an ultraviolet ray.

Polymerization of the acrylic polymer (X) may employ any of agents such as polymerization initiators, emulsifiers, and chain-transfer agents according to necessity. These agents are not limited and may be chosen suitably from among known or customary ones. More specifically, examples of the polymerization initiators include azo polymerization initiators such as 2,2'-azobisisobutyronitrile, 2,2'-azobis(4-methoxy-2,4-dimethylvaleronitrile), 2,2'-azobis(2,4-dimethylvaleronitrile), 2,2'-azobis(2-methylbutyronitrile), 1,1'-azobis(cyclohexane-1-carbonitrile), 2,2'-azobis(2,4,4-trimethylpentane), dimethyl 2,2'-azobis(2-methylpropionate), and 2,2'-azobis{2-[1-(2-hydroxyethyl)-2-imidazolin-2-yl]propane} dihydrochloride; and peroxide polymerization initiators such as benzoyl peroxide, t-butyl hydroperoxide, di-t-butyl peroxide, t-butyl peroxybenzoate, dicumyl peroxide, 1,1-bis(t-butylperoxy)-3,3,5-trimethylcyclohexane, and 1,1-bis(t-butylperoxy)cyclododecane. Each of different polymerization initiators may be used alone or in combination. The amount of the polymerization initiator(s) is not critical and may be chosen suitably within a common range of usage.

Examples of the chain-transfer agents include dodecanethiol (i.e., lauryl mercaptan), 2-mercaptoethanol, glycidyl mercaptan, mercaptoacetic acid, 2-ethylhexyl thioglycolate, 2,3-dimercapto-1-propanol, and $\alpha$-methylstyrene dimer. Exemplary emulsifiers include anionic emulsifiers such as sodium lauryl sulfate, ammonium lauryl sulfate, sodium dodecylbenzenesulfonate, sodium polyoxyethylene alkyl ether sulfates, ammonium polyoxyethylene alkylphenyl ether sulfates, and sodium polyoxyethylene alkylphenyl ether sulfates; and nonionic emulsifiers such as polyoxyethylene alkyl ethers and polyoxyethylene alkylphenyl ethers. Each of different chain-transfer agents and each of different emulsifiers may be used alone or in combination, respectively.

The solution polymerization may employ any of common solvents. Exemplary solvents include organic solvents including esters such as ethyl acetate and n-butyl acetate; aromatic hydrocarbons such as toluene and benzene; aliphatic hydrocarbons such as n-hexane and n-heptane; alicyclic hydrocarbons such as cyclohexane and methylcyclohexane; and ketones such as methyl ethyl ketone and methyl isobutyl ketone. Each of different solvents may be used alone or in combination.

Though not critical, the acrylic polymer (X) has a weight-average molecular weight (Mw) of preferably from 20x $10^4$ to 160x $10^4$, more preferably from 30x $10^4$ to 140x $10^4$, and furthermore preferably from 30x $10^4$ to 70x $10^4$. Within this range, the thermosetting acrylic adhesive composition may have more satisfactory coatability to thereby have higher productivity, and the resulting thermosetting acrylic adhesive layer may have a higher strength, these may allow the conductive thermosetting adhesive tape to exhibit stable electroconductivity even when used over a long duration and/or used under severe environmental conditions. The weight-average molecular weight of the acrylic polymer (X) may be controlled typically by the types and amounts of the polymerization initiator and the chain-transfer agent; and the polymerization conditions such as polymerization temperature, polymerization time, monomer concentration, and monomer dropping rate.

The weight-average molecular weight may be measured through gel permeation chromatography (GPC). More specifically, the weight-average molecular weight may be determined through measurement according to the following

<Method for GPC Measurement>.

<Method for GPC Measurement>

Sample Preparation

An acrylic polymer to be measured is dissolved in an eluent to give a 0.1% solution of the acrylic polymer in THF, the solution is left stand for one day, filtrated through a 0.45-$\mu$m membrane filter, and the filtrate subjected as a sample to a GPC measurement under the following measurement conditions.

Measurement Conditions

GPC system: HLC-8120GPC (supplied by Tosoh Corporation)
Column: TSK-GEL Super AWM-H, TSK-GEL Super AW4000, and TSK-GEL Super AW2500 (each supplied by Tosoh Corporation)
Column size: each 6 mm in diameter and 15 cm in length, total 45 cm in length
Column temperature: 40°C
Eluent: 10 mM LiBr and 10 mM phosphoric acid in THF (tetrahydrofuran)
Flow rate: 0.4 mL/min
Inlet pressure: 4.6 MPa
Injection volume: 20 $\mu$L
Detector: differential refractive index detector
Reference standard: polyethylene oxide
Data processor: GPC-8020 (supplied by Tosoh Corporation)

Though not critical, the content (percentage content, blending ratio) of the acrylic polymer (X) in the thermosetting acrylic adhesive composition is preferably 30 percent by weight or more, more preferably from 30 to 95 percent by weight, and furthermore preferably from 40 to 90 percent by weight, based on the total solids content (100 percent by weight) of the thermosetting acrylic adhesive composition. This range is preferred for satisfactory bond strength.

The thermosetting resin is not limited and may be any of known or customary thermosetting resins that are cured by heating to exhibit bonding properties. The thermosetting resin is used for imparting thermosetting properties. Exemplary thermosetting resins include phenolic resins, amino resins, unsaturated polyester resins, epoxy resins, polyurethane resins, silicone resins, and thermosetting polyimide resins. Among them, the thermosetting resin is preferably a phenolic resin and/or an epoxy resin and is more preferably a phenolic resin. Each of different thermosetting resins may be used alone or in combination.

The phenolic resin is not limited and may be any of known or customary phenolic resins, which are typified by resol phenolic resins, novolak phenolic resins, and a variety of modified phenolic resins (e.g., alkyl-modified phenolic resins). Each of different phenolic resins may be used alone or in combination. The phenolic resin is particularly preferably an etherified phenolic resin. Such an etherified phenolic resin excels in reactivity upon heat curing and, when used as the thermosetting resin, significantly helps the thermosetting adhesive layer to have a further higher bond strength. The etherified phenolic resin to be used herein preferably as the thermosetting resin is also referred to as an "etherified phenolic resin (Y)."

The etherified phenolic resin (Y) is a phenolic resin having methylol groups part of which (methylol groups in the phenolic resin) is etherified. Specifically, the etherified phenolic resin (Y) is a phenolic resin having at least an unetherified methylol group and an etherified methylol group.

The etherified phenolic resin (Y) is more preferably an alkyl-etherified phenolic resin which is a phenolic resin having methylol groups, part of which is etherified with an alkyl group. Examples of the alkyl groups include alkyl groups having 1 to 20 carbon atoms, such as methyl group, ethyl group, propyl group, isopropyl group, n-butyl group, isobutyl group, s-butyl group, t-butyl group, pentyl group, isopentyl group, hexyl group, heptyl group, octyl group, 2-ethylhexyl group, isooctyl group, nonyl group, isononyl group, decyl group, isodecyl group, undecyl group, dodecyl group, tridecyl group, tetradecyl group, pentadecyl group, hexadecyl group, heptadecyl group, octadecyl group, nonadecyl group, and eicosyl group. Among them, n-butyl group is preferred.

The phenolic resin constituting the skeleton of the etherified phenolic resin (Y) is not limited. Exemplary etherified phenolic resins (Y) include etherified novolak phenolic resins, etherified resol phenolic resins, and etherified cresol resins.

Among them, etherified cresol resins are preferred, of which butyl-etherified cresol resins (cresol resins having methylol groups, part of which is etherified with butyl group) are more preferred. Each of different etherified phenolic resins (Y) may be used alone or in combination.

The percentage of the etherified methylol groups in the etherified phenolic resin (Y) is typically preferably 50 mole percent or more based on the total moles (100 mole percent) of the etherified methylol groups and unetherified methylol groups. The etherified phenolic resin (Y), if having a percentage of etherified methylol groups of less than 50 mole percent, may suffer from an undesirably promoted reaction at room temperature or may suffer from insufficient reactivity upon heat curing.

The etherified phenolic resin (Y) may also be any of commercially available etherified phenolic resins, which are typified by trade name "SUMILITERESIN PR-55317" (butyl-etherified cresol resin, supplied by Sumitomo Bakelite Co., Ltd., percentage of etherified methylol groups: 90 mole percent); and trade name "CKS-3898" (butyl-etherified cresol resin, supplied by Showa Denko K.K.).

Though not critical, the content (percentage content, blending ratio) of the thermosetting resin (particularly the etherified phenolic resin (Y)) in the thermosetting acrylic adhesive composition is preferably from 1 to 200 parts by weight, more preferably from 10 to 150 parts by weight, furthermore preferably from 10 to 130 parts by weight, and most preferably from 10 to 100 parts by weight, per 100 parts by weight of the acrylic polymer (X). The etherified phenolic resin (Y), when contained in a content of 1 part by weight or more, may help the thermosetting acrylic adhesive layer to exhibit more satisfactory thermosetting properties. The etherified phenolic resin (Y), when contained in a content of 200 parts by weight or less, may protect the adhesive from squeezing out upon high-temperature pressing, thus being desirable.

The thermosetting resin (particularly the etherified phenolic resin (Y)), when contained in the thermosetting acrylic adhesive composition in a content of 20 parts by weight or more per 100 parts by weight of the acrylic polymer (X), may help the thermosetting acrylic adhesive layer before curing to have a larger tack, and this allows temporary fixation.

The thermosetting acrylic adhesive composition preferably includes a solvent. Exemplary solvents include organic solvents including esters such as ethyl acetate and n-butyl acetate; aromatic hydrocarbons such as toluene and benzene; aliphatic hydrocarbons such as n-hexane and n-heptane; alicyclic hydrocarbons such as cyclohexane and methylcyclohexane; and ketones such as methyl ethyl ketone and methyl isobutyl ketone. Each of different solvents may be used alone or in combination. As used herein the term "solvent" also means and includes a dispersion medium.

Where necessary, the thermosetting acrylic adhesive composition may further include any of known additives within ranges not adversely affecting the characteristic properties of the present invention. Exemplary additives include age inhibitors, fillers, colorants (e.g., pigments and dyestuffs), ultraviolet absorbers, antioxidants, crosslinking agents, tackifiers, plasticizers, softeners, surfactants, and antistatic agents. Each of different additives may be used alone or in combination.

Of such additives, a conductive filler may be contained in the thermosetting adhesive composition (particularly, the thermosetting acrylic adhesive composition) for the formation of the thermosetting adhesive layer. Specifically, a conductive filler may be added to the thermosetting adhesive layer (particularly, thermosetting acrylic adhesive layer) constituting the conductive thermosetting adhesive tapes according to the present invention. The conductive filler, when added, helps the conductive thermosetting adhesive tapes according to the present invention to have further higher reliability in electroconductivity. Each of different conductive fillers may be used alone or in combination.

Specifically, the thermosetting adhesive layer of the conductive thermosetting adhesive tapes according to the present invention may be a thermosetting adhesive layer formed from a thermosetting adhesive composition containing a conductive filler, for satisfactory reliability of the electroconductivity.

Examples of the conductive filler include, but are not limited to, known or customary ones, which are typified by fillers made of metals such as nickel, iron, chromium, cobalt, aluminum, antimony, molybdenum, copper, silver, platinum, and gold; fillers made of alloys or oxides of these metals; fillers made of carbon such as carbon black; and fillers including base materials such as polymer beads or resins coated with these (the fillers made of metals, alloys or oxides of the metals, or carbon).

Among them, metal fillers and metal-coated fillers (e.g., fillers including polymer beads or resins coated with metals) are preferred as the conductive filler, of which gold fillers and silver fillers are particularly preferred for satisfactory reliability in conduction upon use over a long duration.

The conductive filler is not limited in its shape, but is preferably spheroidal or spike-like and is more preferably spheroidal. Such a spheroidal or spike-like conductive filler is readily dispersed uniformly in the thermosetting adhesive layer and thereby helps the conductive thermosetting adhesive tape to readily have both satisfactory adhesiveness and good electroconductivity.

The conductive filler may be a mixture of ones having different shapes. Typically, the conductive filler may be a mixture of a spheroidal conductive filler and a spike-like conductive filler.

Though not critical, the conductive filler has an aspect ratio of typically preferably from 1.0 to 2.0 and more preferably from 1.0 to 1.5. The aspect ratio may be measured typically with a scanning electron microscope (SEM).

The conductive filler may be a commercial product, which is typified by trade name "Ag-HWQ-400" (silver filler supplied by Fukuda Metal Foil & Powder Co., Ltd.).

Though not critical, the content of the conductive filler in the thermosetting adhesive composition (particularly the thermosetting acrylic adhesive composition) is preferably from 25 to 250 parts by weight, more preferably from 30 to 150 parts by weight, and furthermore preferably from 35 to 100 parts by weight, per 100 parts by weight of the total solids content of the thermosetting adhesive composition excluding the conductive filler. The conductive filler, when contained in a content of 25 parts by weight or more, may help the conductive thermosetting adhesive tape to have more satisfactory electroconductivity. In contrast, the conductive filler, when contained in a content of 250 parts by weight or less, may be resistant to aggregation and may help the thermosetting adhesive layer to be resistant to have an excessively rough surface. This allows the conductive thermosetting adhesive tape to have both satisfactory long-term reliability in conduction and a high bond strength and to be advantageous in cost.

In a preferred embodiment, the thermosetting acrylic adhesive composition contains an acrylic polymer (X) as a principal component and further contains an etherified phenolic resin (Y). Specifically, a conductive thermosetting adhesive tape according to the preferred embodiment is a conductive thermosetting acrylic adhesive tape having a thermosetting acrylic adhesive layer formed from a thermosetting acrylic adhesive composition containing the acrylic polymer (X) as a principal component and further containing the etherified phenolic resin (Y).

The thermosetting acrylic adhesive composition may be prepared typically by mixing components such as the acrylic polymer (X), the thermosetting resin (particularly the etherified phenolic resin (Y)), and additives added according to necessity. The acrylic polymer (X) and/or the thermosetting resin may be dissolved in a solvent to form a solution, or may be dispersed in a dispersion medium to form a dispersion, before subjected to the preparation of the thermosetting acrylic adhesive composition.

The thermosetting adhesive layer is formed from the thermosetting adhesive composition. The thermosetting adhesive layer may have a single-layer structure or multilayer structure.

Though not critical, the thermosetting adhesive layer (before curing), particularly the thermosetting acrylic adhesive layer (before curing), has a gel fraction of preferably less than 70% (percent by weight) (e.g., 0% or more and less than 70%), more preferably less than 60%, and furthermore preferably less than 50%, for good flexibility of the thermosetting adhesive layer. The gel fraction may be determined as a content of insolubles in methyl ethyl ketone. Specifically, the gel fraction is determined by immersing a sample in methyl ethyl ketone at room temperature (23°C) for 7 days, measuring the weight of insolubles after immersion, calculating the weight fraction (unit: percent by weight) of the weight of insolubles to the weight of the sample before immersion, and defining the weight fraction as the gel fraction. The thermosetting adhesive layer (particularly the thermosetting acrylic adhesive layer), when having a gel fraction of less than 70%, may have more satisfactory flexibility and thereby have a higher bond strength, thus being desirable.

Specifically, the gel fraction (fraction of insolubles in methyl ethyl ketone) may be measured and determined by the following <Method for Gel Fraction Measurement>.

<Method for Gel Fraction Measurement>

About 0.1 g of the thermosetting adhesive layer of the conductive thermosetting adhesive tape according to the present invention is sampled as a thermosetting adhesive layer for gel fraction measurement. The thermosetting adhesive layer for gel fraction measurement is covered by a porous tetrafluoroethylene sheet (trade name "NTF1122," supplied by Nitto Denko Corporation) having pores with an average pore size of 0.2 μm, tied with a kite string, the weight of the resulting article is measured and defined as a weight before immersion. The weight before immersion is a total weight of the thermosetting adhesive layer, the tetrafluoroethylene sheet, and the kite string. Independently, the total weight of the tetrafluoroethylene sheet and the kite string is measured and defined as a tare weight.
Next, the article including the thermosetting adhesive layer covered by the tetrafluoroethylene sheet and tied with the kite string (this article is hereinafter referred to as "sample") is immersed in 50 mL of methyl ethyl ketone filled in a 50-mL vessel and left stand at room temperature (23°C) for one week (7 days). The sample (after treatment with methyl ethyl ketone) is retrieved from the vessel, transferred to an aluminum cup, dried in a drier at 130°C for 2 hours to remove methyl ethyl ketone, and the weight of the resulting sample is measured and defined as a weight after immersion.
The gel fraction is then calculated according to the following equation:

```
Gel fraction (percent by weight) = (A-B)/(C-B) × 100
```

wherein "A" represents the weight after immersion; "B" represents the tare weight; and "C" represents the weight before immersion.

Though not critical, the thermosetting adhesive layer (particularly the thermosetting acrylic adhesive layer) has a gel fraction after a curing treatment at 150°C for one hour of preferably 90% (percent by weight) or more, more preferably 92% or more, and furthermore preferably 96% or more. The upper limit of the gel fraction of the thermosetting adhesive layer after a curing treatment at 150°C for one hour is not limited and may for example be 100%. The thermosetting adhesive layer, when having the gel fraction of 90% or more, can undergo a curing treatment rapidly and sufficiently and may have further more satisfactory adhesiveness after curing, thus being desirable. The thermosetting adhesive layer, if having the gel fraction of less than 90%, may suffer from insufficient proceeding of a curing reaction when subjected to a curing treatment at 150°C for one hour and may thereby suffer from an insufficient bond strength after curing. In this case, the curing may require a higher curing temperature and/or a longer curing time for sufficient bonding and may cause higher cost.

Specifically, the gel fraction of the thermosetting adhesive layer after a curing treatment at 150°C for one hour may be determined typically in the following manner. The conductive thermosetting adhesive tape according to the present invention is subjected to a curing treatment by heating at 150°C for one hour, the thermosetting adhesive layer (thermosetting adhesive layer after curing) is sampled from the conductive thermosetting adhesive tape, and this is used as the "thermosetting adhesive layer for gel fraction measurement" and subjected to the measurement and calculation by the procedure of the <Method for Gel Fraction Measurement>.

Though not critical, the thermosetting adhesive layer has a thickness of preferably from 10 to 80 $\mu$m, more preferably from 20 to 60 $\mu$m, and particularly preferably from 25 to 50 $\mu$m. The thermosetting adhesive layer, when having a thickness of 10 $\mu$m or more, may contribute to the dispersion of a stress generated upon affixation and may protect the conductive thermosetting adhesive tape from separation. In contrast, the thermosetting adhesive layer, when having a thickness of 80 $\mu$m or less, may be advantageous for reduction in size and/or thickness of products. If the thermosetting adhesive layer has an excessively large thickness particularly in the case of the after-mentioned conductive thermosetting adhesive tape having a through-hole (conductive thermosetting adhesive tape "a"), a fin formed by boring the through-hole may sink back into the thermosetting adhesive layer, namely, the fin may collapse in such a direction as to clog the through-hole. This may prevent the metallic foil from being exposed from the surface of the tape on the thermosetting adhesive layer side (this phenomenon is hereinafter referred to as "invasion by thermosetting adhesive layer") and may thereby impede increase in area of the terminal. The thermosetting adhesive layer, when having a thickness of 80 $\mu$m or less, may less suffer from the invasion by thermosetting adhesive layer, may allow the tape to have a larger area of terminal(s) efficiently and to exhibit stable electroconductivity.

[Conductive Thermosetting Adhesive Tapes]

Conductive thermosetting adhesive tapes according to embodiments of the present invention each include a metallic foil and, present on one side thereof, a thermosetting adhesive layer. The conductive adhesive tapes (conductive thermosetting adhesive tapes) may further include any of other layers (e.g., intermediate layers and under coats) within ranges not adversely affecting advantageous effects of the present invention, in addition to the metallic foil and the thermosetting adhesive layer.

A separator (release liner) may be provided on an adhesive face in the conductive thermosetting adhesive tapes according to the present invention. The separator is not limited, may be any of customary release papers, and is typified by base materials having a layer treated with a release agent; low-adhesive base materials formed from fluorocarbon polymers; and low-adhesive base materials formed from nonpolar polymers. Examples of the base materials having a layer treated with a release agent include plastic films and papers whose surface has been treated with a release agent such as a silicone release agent, a long-chain alkyl release agent, a fluorine-containing release agent, or molybdenum sulfide. Examples of the fluorocarbon polymers include polytetrafluoroethylenes, polychlorotrifluoroethylenes, poly(vinyl fluoride)s, poly(vinylidene fluoride)s, tetrafluoroethylene-hexafluoropropylene copolymers, and chlorofluoroethylene-vinylidene fluoride copolymers. Examples of the nonpolar polymers include olefinic resins such as polyethylenes and polypropylenes. Among them, a separator formed from a polyethylene or polypropylene is preferably used for suppressing a lifting (gap) of the separator. The lifting of the separator is a phenomenon in which the separator is partially peeled off from the adhesive face. The separator may be formed according to a known or customary procedure. The separator is not limited typically in thickness.

The conductive thermosetting adhesive tapes according to the present invention may be prepared by forming a thermosetting adhesive layer on one side of a metallic foil. An exemplary technique to form the thermosetting adhesive layer is a technique of coating the metallic foil or separator with a thermosetting adhesive composition, and, where necessary, drying and/or curing the applied composition.

The coating (application) in the technique of forming the thermosetting adhesive layer may employ a known coating process using a customary coater which is typified by a rotogravure roll coater, reverse roll coater, kiss-contact roll coater, dip roll coater, bar coater, knife coater, spray coater, comma coater, and direct coater.

Though not critical, the conductive thermosetting adhesive tapes according to the present invention have a thickness of preferably from 20 to 180 μm, more preferably from 40 to 140 μm, and furthermore preferably from 50 to 110 μm. The conductive thermosetting adhesive tape, when having a thickness of 20 μm or more, may have a sufficient tape strength and have more satisfactory workability. In contrast, the conductive thermosetting adhesive tape, when having a thickness of 180 μm or less, may advantageously contribute to reduction in thickness and/or size of products. As used herein the term "thickness of conductive thermosetting adhesive tape" refers to a thickness from the metallic foil surface (of two surfaces of the metallic foil, a surface not bearing the thermosetting adhesive layer) to the adhesive face in the conductive thermosetting adhesive tape.

The conductive thermosetting adhesive tapes according to the present invention and the thermosetting adhesive layer can exhibit a satisfactory bond strength by proceeding a curing reaction through heating (heat curing). The conductive thermosetting adhesive tapes according to the present invention, when heated to cure the thermosetting adhesive layer (heat-cured), can give adhesive tapes having a high (intensive) bond strength (heat-cured conductive thermosetting adhesive tapes). Though conditions thereof are not critical, the curing (heating) is preferably performed by heating at a temperature of 100°C or higher (e.g., from 100°C to 200°C) for 30 minutes or longer (e.g., 30 to 360 minutes) and is more preferably performed by heating at a temperature of 150°C or higher (e.g., from 150°C to 200°C) for 60 minutes or longer (e.g., 60 to 360 minutes).

The conductive thermosetting adhesive tapes according to the present invention are not limited, as long as including a metallic foil and, on one side thereof, a thermosetting adhesive layer, having a bond strength of the thermosetting adhesive layer before curing of 2 N/20 mm or more, and having a bond strength of the thermosetting adhesive layer after curing of 10 N/20 mm or more. In an exemplary specific embodiment, the conductive thermosetting adhesive tape is a conductive thermosetting adhesive tape which has a metallic foil; a thermosetting adhesive layer present on one side of the metallic foil; and terminal or terminals exposed from a surface of the tape on the thermosetting adhesive layer side, in which the total area of terminal or terminals present per 30 $mm^2$ of the surface of the thermosetting adhesive layer (the surface of the conductive thermosetting adhesive tape on the thermosetting adhesive layer side) is controlled to be from 0.1 to 5 $mm^2$. Hereinafter the conductive thermosetting adhesive tape according to this specific embodiment is also referred to as "conductive thermosetting adhesive tape A."

As used herein the term "terminal" refers to a metal part (including the case where the surface of the metal part is oxidized) which is exposed from the surface on the thermosetting adhesive layer side of the conductive thermosetting adhesive tape A and which is in electrical conduction with the metallic foil in the conductive thermosetting adhesive tape A. Specifically, the "terminal" refers to a metal part which is exposed when the conductive thermosetting adhesive tape A is observed from the thermosetting adhesive layer surface side.

When the conductive thermosetting adhesive tape A having such terminal is affixed to an adherend, at least part of the terminal comes in contact with the adherend, and this ensures electrical conduction between the adherend and the metallic foil of the conductive thermosetting adhesive tape A. Specifically, the terminal helps the conductive thermosetting adhesive tape A to exhibit electroconductivity in the thickness direction. Above all, the terminal is preferably a terminal formed by part of the metallic foil constituting the conductive thermosetting adhesive tape. This allows the conductive thermosetting adhesive tape to exhibit stable electroconductivity in the thickness direction. Specifically, the terminal is preferably a terminal formed by allowing part of the metallic foil constituting the conductive thermosetting adhesive tape to be exposed from the surface of the tape on the thermosetting adhesive layer side.

The conductive thermosetting adhesive tape A preferably has a total area of terminals present per 30 $mm^2$ of the surface of the thermosetting adhesive layer of from 0.1 to 5 $mm^2$. The total area of terminals is a total area of terminals present per 30 $mm^2$ of the surface of the tape on the thermosetting adhesive layer side and is hereinafter also simply referred to as "total area of terminals." The upper limit of the total area of terminals is preferably 5 $mm^2$, more preferably 2.5 $mm^2$, furthermore preferably 1 $mm^2$, and particularly preferably 0.5 $mm^2$. The lower limit of the total area of terminals is preferably 0.1 $mm^2$, more preferably 0.12 $mm^2$, and furthermore preferably 0.15 $mm^2$. The conductive thermosetting adhesive tape A, when having a total area of terminals of 0.1 $mm^2$ or more, may exhibit stable electroconductivity, because the conductive thermosetting adhesive tape A becomes resistant to an abrupt increase in resistance due to reduction in contact area between the terminal(s) and the adherend (hereinafter also simply referred to as "contact area"), which reduction in contact area is caused as a result of use over a long duration and/or use in severe environments. In contrast, the conductive thermosetting adhesive tape A, when having a total area of terminals of 5 $mm^2$ or less, may have more satisfactory adhesiveness to the adherend. As used herein the term "area of terminal(s)" refers to an area of an exposed metal part (terminal) when the surface of the tape on the thermosetting adhesive layer side of the conductive thermosetting adhesive tape A is observed in a direction perpendicular to the thermosetting adhesive layer surface. Specifically, the term "area of terminal(s)" refers to a projected area of the terminal(s) when the surface of the tape on the thermosetting adhesive layer side is observed from a direction perpendicular to the thermosetting adhesive layer surface.

Though not limited, the total area of terminals may be determined typically by measuring respective areas (projected areas) of all terminals present per 30 $mm^2$ of the surface of the thermosetting adhesive layer, and summing up these areas. More specifically, the total area of terminals may be measured typically according to the following method.

[Method for Measurement of Total Area of Terminals]

A sample conductive thermosetting adhesive tape is cut out to give a test portion having a size of 6 mm long by 5 mm wide (area: 30 mm$^2$).

The thermosetting adhesive layer side surface of the test portion is observed with a digital microscope (product number "VHX-600" supplied by Keyence Corporation) at a magnification of 200 times (using "VH-Z20" lens), and a picture (image in the plane of projection) of a terminal is taken, which terminal is a metal part exposed from the surface of the tape on the thermosetting adhesive layer side. Next, a region of the terminal in the picture is specified in a measurement mode, the area of the region is measured, and thereby the area of the terminal is measured. Likewise, areas of all terminals present in the test portion are measured, summed up, and thereby give a total area of terminals present per 30 mm$^2$ of the surface of the thermosetting adhesive layer.

More specifically, the total area of terminals may be measured according to a method described in "(2) Area of Terminals" in after-mentioned "Evaluations".

When the conductive thermosetting adhesive tape has a tape width of less than 6 mm, the total area of terminals may be measured typically by using a test portion cut out so as to give an area of the thermosetting adhesive layer of 30 mm$^2$, or by performing the above-mentioned measurement, except for using a test portion having an area of the thermosetting adhesive layer of less than 30 mm$^2$ and converting the measured value to a value per 30 mm$^2$ of the surface of the thermosetting adhesive layer.

The method for the measurement of the total area of terminals is not limited to one mentioned above and may also be, for example, a method of measuring areas (projected areas) of all terminals present per an arbitrary area (e.g., 100 cm$^2$) of the thermosetting adhesive layer, summing up the measured areas, and converting the total sum to a value per 30 mm$^2$ of the surface of the thermosetting adhesive layer.

The way to form the terminal in the conductive thermosetting adhesive tape A is not limited, but is exemplified by a method of embossing the tape from the metallic foil side to expose part of the metallic foil from the surface of the tape on the thermosetting adhesive layer side and employing this as a terminal; or a method of boring a through-hole from the metallic foil side to form a fin or fins of the metallic foil on a surface of the tape on the thermosetting adhesive layer side and employing this as a terminal. Among them, preferred is the method of boring a through-hole from the metallic foil side to form a fin or fins of the metallic foil on a surface of the tape on the thermosetting adhesive layer side and employing this as a terminal. For allowing the conductive thermosetting adhesive tape A to exhibit further stable electroconductivity, more preferred is a method of boring a through-hole from the metallic foil side to form a fin or fins of the metallic foil on a surface of the tape on the thermosetting adhesive layer side, folding back the fin or fins, and employing this as a terminal. Specifically, the terminal or terminals in the conductive thermosetting adhesive tape A are preferably a terminal or terminals formed by boring a through-hole from the metallic foil side to form a fin or fins of the metallic foil on a surface of the tape on the thermosetting adhesive layer side, and folding back the fin or fins. Terminals are preferably formed by this method, because this allows easy control of the total area of terminals present per 30 mm$^2$ of the surface of the thermosetting adhesive layer within the above-specified range.

A conductive thermosetting adhesive tape may be prepared by the method of boring a through-hole from the metallic foil side to form a fin or fins of the metallic foil on a surface of the tape on the thermosetting adhesive layer side, folding back the fin or fins, and employing this as a terminal. The resulting conductive thermosetting adhesive tape is hereinafter referred to as a "conductive thermosetting adhesive tape "a." Specifically, the conductive thermosetting adhesive tape "a" is a conductive thermosetting adhesive tape having a terminal or terminals, which terminal or terminals are formed by boring a through-hole from the metallic foil side to form a fin or fins of the metallic foil on a surface of the tape on the thermosetting adhesive layer side, and folding back the fin or fins. The conductive thermosetting adhesive tape "a" will be illustrated in detail below. It should be noted, however, this is never intended to limit the scope of the present invention. As used herein the term "fin" refers to a metallic foil which sticks up at the surface of the tape on the thermosetting adhesive layer side when the through-hole is bored, and is also referred to as "burr." Also as used herein the phrase "folding back the fin or fins" refers to that the fin or fins are folded or bent so that the metallic foil constituting the fin or fins is exposed from the surface of the tape on the thermosetting adhesive layer side.

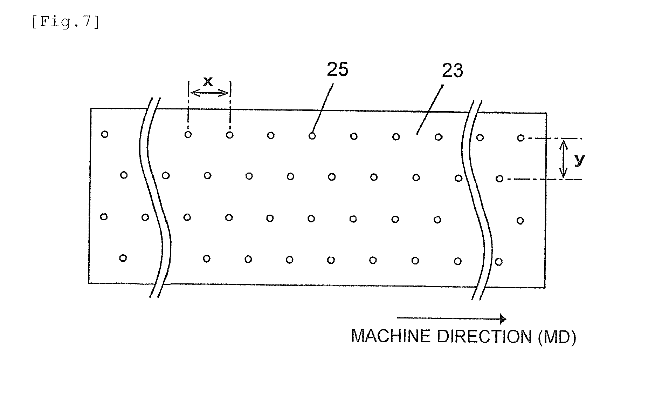

The conductive thermosetting adhesive tape "a" is a single-coated adhesive tape which has a metallic foil and, present on one side thereof, a thermosetting adhesive layer present and has at least one hole (through-hole) penetrating the metallic foil and the thermosetting adhesive layer, in which part of the metallic foil is exposed via the through-hole from the surface of the tape on the thermosetting adhesive layer side and serves as a terminal. The conductive thermosetting adhesive tape "a," as having the terminal, has ensured electroconductivity (electroconductivity in the thickness direction) between the metallic foil and the adhesive face to be affixed to the adherend. Figs. 6 and 7 are schematic views illustrating exemplary configurations of the conductive thermosetting adhesive tape "a." Fig. 6 is a schematic view (cross-sectional view at a terminal)) of the conductive thermosetting adhesive tape "a." With reference to Fig. 6, a conductive thermosetting adhesive tape 23 has a metallic foil 21, and a thermosetting adhesive layer 22 present on one side of the metallic foil 21. A through-hole 25 is provided in the metallic foil 21 and the thermosetting adhesive layer 22, and part of the metallic foil 21 is exposed via the through-hole 25 from the surface of the tape on the thermosetting adhesive layer side to form a terminal 24. Thus, the through-hole 25 and the terminal 24 in the conductive thermosetting adhesive tape "a" form a conducting part 26 which allows passing of an electrical current between the metallic foil 21 and the terminal 24.

Fig. 7 is a schematic view (plan view) illustrating an embodiment of the conductive thermosetting adhesive tape "a." The through-holes 25 in Fig. 7 are positioned in a pattern of so-called "scatter pattern." Such a scatter pattern may be formed typically by aligning points at a spacing of "y" to form rows, the rows each having an arrangement spacing of the points of "x" in a machine direction (longitudinal direction); and arranging the rows so that pins in a row are located at positions deviating from the positions of pins in an adjacent row each by one-half of "x". Though not critical, the arrangement spacing "x" is typically preferably from 1 to 5 mm and more preferably from 2 to 4 mm. Also though not critical, the spacing "y" is typically preferably from 1 to 4 mm and more preferably from 2 to 3 mm.

Though not critical, the conductive thermosetting adhesive tape "a" has a number (density) of through-holes present per 30 mm$^2$ of the surface of the thermosetting adhesive layer (number of through-holes present per 30 mm$^2$ of the surface of the tape on the thermosetting adhesive layer side) of typically preferably from 3 to 10 per 30 mm$^2$ and more preferably from 3 to 6 per 30 mm$^2$. The conductive thermosetting adhesive tape "a," when having the through-holes in a number of 3 or more per 30 mm$^2$, may have a larger number of contact points of the terminals with respect to the adherend. Thus, the conductive thermosetting adhesive tape "a" may ensure sufficient electrical conduction and thereby suppress an abrupt increase in resistance by maintaining contact points in a sufficient number, even when the respective terminals have decreased contact areas as a result of use over a long duration and/or use under severe environmental conditions. In contrast, the conductive thermosetting adhesive tape "a," when having the through-holes in a number of 10 or less per 30 mm$^2$, may maintain a sufficient strength and thereby have more satisfactory workability.

Though not limited, the number (density) of the through-holes may be measured typically by counting through-holes present per an arbitrary area (e.g., 30 mm$^2$ or 100 cm$^2$) of the thermosetting adhesive layer visually or with, or example, a digital microscope; and, where necessary, converting the counted number to a number per 30 mm$^2$ of the surface of the thermosetting adhesive layer.

The conductive thermosetting adhesive tape "a" has an average area of terminal(s) per one through-hole (hereinafter also simply referred to as "average terminal area") of preferably from 50,000 to 500,000 $\mu$m$^2$, more preferably from 100,000 to 400,000 $\mu$m$^2$, and furthermore preferably from 100,000 to 300,000 $\mu$m$^2$. The conductive thermosetting adhesive tape "a," when having an average terminal area of 50,000 $\mu$m$^2$ or more, may have a large contact area of the terminals with respect to the adherend, may thereby maintain a contact area sufficient to ensure satisfactory electroconductivity, and may exhibit stable electroconductivity, even when the tape suffers from decrease in contact area as a result of use over a long duration and/or use under severe environmental conditions. In contrast, the conductive thermosetting adhesive tape "a," when having an average terminal area of 500,000 $\mu$m$^2$ or less, may not suffer from excessively large through-holes and may thereby maintain a sufficient strength to exhibit more satisfactory workability.

Though not limited, the average terminal area may be determined typically by measuring respective projected areas of all through-holes present per 30 mm$^2$ of the surface of the thermosetting adhesive layer; summing up measured projected areas to give a total area (total area of terminals present per 30 mm$^2$ of the surface of the thermosetting adhesive layer); and dividing the total area of terminals by the number of through-holes present per 30 mm$^2$ of the surface of the thermosetting adhesive layer. More specifically, the average terminal area may be measured typically according to the following method.

[Method for Average Terminal Area Measurement]

A sample conductive thermosetting adhesive tape is cut out to give a test portion having a size of 6 mm long by 5 mm wide (area: 30 mm$^2$) .

The thermosetting adhesive layer side surface of the test portion is observed with a digital microscope (product number "VHX-600" supplied by Keyence Corporation) at a measurement magnification of 200 times (using "VH-Z20" lens), and a picture (image in the plane of production) of a terminal is taken, which terminal is a metal part exposed from the surface of the tape on the thermosetting adhesive layer side. Next, a region of the terminal in the picture is specified in a measurement mode, the area of the region is measured, and thereby the area of the terminal is measured. Likewise, areas of all terminals present in the test portion are measured, summed up, and thereby give a total area of terminals present per 30 mm$^2$ of the surface of the thermosetting adhesive layer.

The above-measured total area of terminals is divided by the number of through-holes present in the test portion to determine an average terminal area per one through-hole. The number of through-holes may be counted visually or with, for example, a digital microscope.

When the conductive thermosetting adhesive tape has a tape width of less than 6 mm, the total area of terminals may be measured typically by using a test portion cut out so as to give an area of the thermosetting adhesive layer of 30 mm$^2$, or by performing the above-mentioned measurement, except for using a test portion having an area of the thermosetting adhesive layer of less than 30 mm$^2$ and converting the measured value to a value per 30 mm$^2$ of the surface of the thermosetting adhesive layer.

More specifically, the average terminal area may be measured according to a method described in "(2) Area of Terminals" in after-mentioned "Evaluations."

The method for the measurement of an average terminal area is not limited to one mentioned above and may also be, for example, a method of measuring respective areas (projected areas) of all terminals present per an arbitrary area (e.g., 100 cm$^2$) of the thermosetting adhesive layer, summing up the measured areas, and dividing the total sum by the number of through-holes present per the arbitrary area of the thermosetting adhesive layer.

The metallic foil constituting the conductive thermosetting adhesive tape "a" is preferably any of those listed above. The thickness of the metallic foil is preferably controlled within the above-specified range. As used herein the term "thickness of the metallic foil" in the conductive thermosetting adhesive tape "a" refers to a thickness of the metallic foil in the conductive thermosetting adhesive tape "a" in a region where no terminal is present.

The thermosetting adhesive layer constituting the conductive thermosetting adhesive tape "a" is preferably any of those mentioned above. The thickness of the thermosetting adhesive layer is preferably controlled within the above-specified range. As used herein the term "thickness of the thermosetting adhesive layer" in the conductive thermosetting adhesive tape "a" refers to a thickness of the thermosetting adhesive layer in the conductive thermosetting adhesive tape "a" in a region where no terminal is present.

The conductive thermosetting adhesive tape "a" has a ratio of the thickness of the thermosetting adhesive layer to the thickness of the metallic foil [(thickness of the thermosetting adhesive layer)/(thickness of the metallic foil)] of preferably from 0.1 to 10, more preferably from 0.2 to 9, and furthermore preferably from 0.3 to 8. The conductive thermosetting adhesive tape "a," when having a ratio of the thickness of the thermosetting adhesive layer to the thickness of the metallic foil of 0.1 or more, may exhibit a sufficient bond strength with respect to the rigidity of the substrate (metallic foil). In contrast, the conductive thermosetting adhesive tape "a," when having a ratio of the thickness of the thermosetting adhesive layer to the thickness of the metallic foil of 10 or less, may less suffer from the invasion by thermosetting adhesive layer and may thereby have a large terminal area.

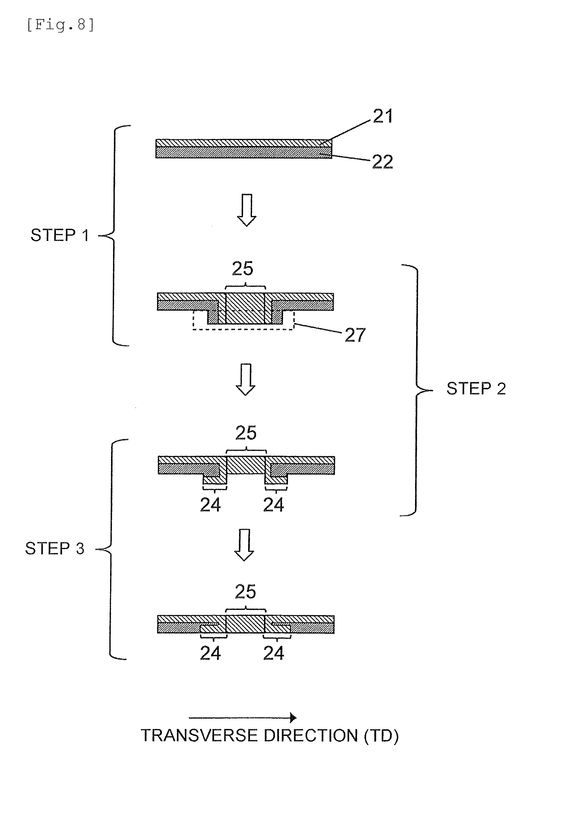

A specific example of the production method of the conductive thermosetting adhesive tape "a" includes, but is not limited to, a production method including at least the step of boring a through-hole in a laminate having a metallic foil and, present on one side thereof, a thermosetting adhesive layer, the boring being performed from the metallic foil side, to form a fin or fins of the metallic foil on the thermosetting adhesive layer side surface (this step is also referred to as "Step 1"); and the step of folding back the fin or fins (this step is also referred to as "Step 2"). Where necessary, the production method may further include the step of performing press working (this step is also referred to as "Step 3") after Step 2. Fig. 8 is a schematic view illustrating an exemplary production method of the conductive thermosetting adhesive tape "a." In Fig. 8, the reference sign 21 stands for a metallic foil; 22 stands for a thermosetting adhesive layer; 25 stands for a through-hole; 27 stands for a fin; and 24 stands for a terminal.

Though not limited, the laminate having a metallic foil and, present on one side thereof, a thermosetting adhesive layer may be one prepared by forming a thermosetting adhesive layer on one side of a metallic foil, or may be a commercially available product. The step of forming a thermosetting adhesive layer on one side of a metallic foil may be performed separately from the production of the conductive thermosetting adhesive tape "a" or may be performed as part (namely, in-line) of the production of the conductive thermosetting adhesive tape "a." The way to form a thermosetting adhesive layer on one side of a metallic foil is not limited and may be any of known or customary methods for the formation of thermosetting adhesive layers. Typically, the aforementioned method for forming the thermosetting adhesive layer can be employed. In such a forming method, the thermosetting adhesive layer may be formed directly on one surface of the metallic foil (direct formation); or may be provided on the surface of the metallic foil by forming a thermosetting adhesive layer on a separator, and transferring (applying) the formed thermosetting adhesive layer to the metallic foil (transfer formation).

[Step 1]

In Step 1, a through-hole is bored in a laminate having a metallic foil and, present on one side thereof, a thermosetting adhesive layer, from the metallic foil side to form a fin or fins of the metallic foil on a surface of the tape on the thermosetting adhesive layer side. The way to bore the through-hole is not limited and may be any of known or customary boring or perforating methods. Among them, preferred is a method for forming a through-hole using a positive die having, on its surface, a pin for the formation of through-hole. This method is preferred for the formation of uniform through-holes.

The shape of the pin is not limited, as long as being a protruded shape capable of forming a through-hole, and examples thereof include shapes of circular cone; pyramids (multiangular pyramids) such as triangular pyramid and quadrangular pyramid; circular cylinder; prisms (multiangular prisms) such as triangular prism and quadrangular prism; and shapes analogous to them. Among such shapes, the pin preferably has a prism shape for the formation of uniform through-holes.

The arrangement of the pins in the positive die is not limited and may be selected according to the arrangement of through-holes which the conductive thermosetting adhesive tape "a" will have. Typically, the spacing of pins corresponding to the machine direction (MD; longitudinal direction) of the conductive thermosetting adhesive tape "a" is preferably from 1 to 5 mm and more preferably from 2 to 4 mm. The spacing of pins corresponding to the transverse direction (TD; width direction) of the conductive thermosetting adhesive tape "a" is preferably from 1 to 4 mm and more preferably from 2 to 3 mm. The locational pattern (arrangement) of the pins is also not limited, but the pins may be arranged typically in a scatter pattern as in the locational pattern of the through-holes in the conductive thermosetting adhesive tape "a" as illustrated in Fig. 7.

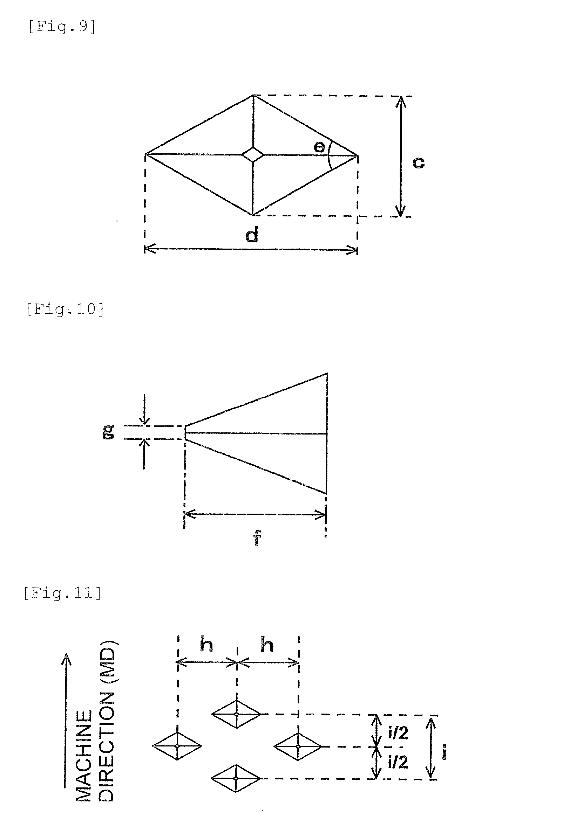

More specifically, an exemplary positive die usable in formation of the through-holes is a positive die which has rhombic quadrangular pyramidal pins as illustrated in Figs. 9 and 10, in which the pins are arranged in a locational pattern illustrated in Fig. 11. The locational pattern is a scatter pattern, in which the pins are aligned at an arrangement spacing of "i" in the longitudinal direction (machine direction of the conductive thermosetting adhesive tape) to form rows of pins, and the rows of pins are arranged at a spacing "h" so that pins in a row are located at positions deviating from the positions of pins in an adjacent row each by one-half of "i". Such pins usable herein preferably have dimensions as follows. In the (rhombic) base of the pins illustrated in Fig. 9, the dimension "c" in Fig. 9 is preferably from 0.5 to 3 mm and more preferably from 0.5 to 2 mm; and the dimension "d" in Fig. 9 is preferably from 0.5 to 3 mm and more preferably from 0.5 to 2 mm. The angle "e" in the base in Fig. 9 is typically preferably from 30° to 120° and more preferably from 40° to 100°.

The dimension "f" (pin height) in Fig. 10 is typically preferably from 0.5 to 3 mm and more preferably from 1 to 2 mm; and the dimension "g" in Fig. 10 is typically preferably from 0.01 to 0.5 mm and more preferably from 0.02 to 0.4 mm. The spacing "i" in Fig. 11 is typically preferably from 1 to 5 mm and more preferably from 2 to 4 mm. The spacing "h" in Fig. 11 is typically preferably from 1 to 4 mm and more preferably from 2 to 3 mm.

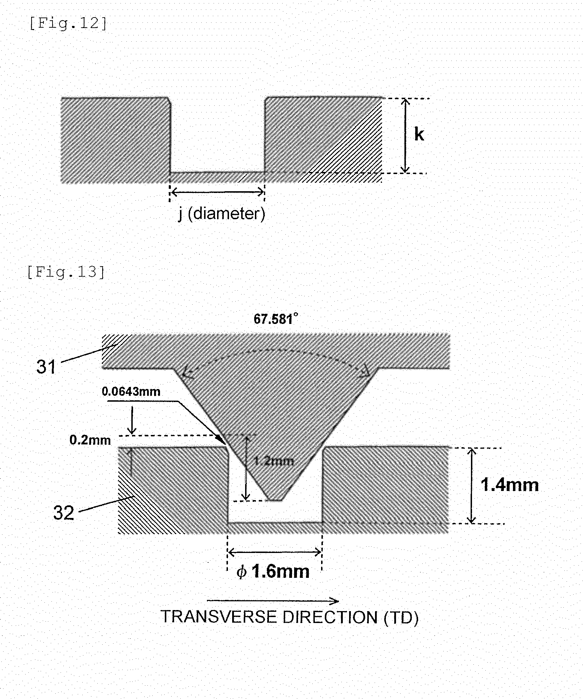

Though not limited, the formation of through-holes using the positive die is preferably performed in combination with a negative die having concavities corresponding to the shapes of pins of the positive die. The negative die, when used, may help the formation of fins capable of being folded back more readily and may thereby help the conductive thermosetting adhesive tape to have larger areas of terminals. The shape and size (dimensions) of the concavities of the negative die are not limited and may be chosen according to the shape and size of the pins of the positive die. Specifically, the cavities may be cylindrical concavities each having a profile illustrated in Fig. 12. Though not critical, the cylindrical concavity illustrated in Fig. 12 may have dimensions such that the dimension "j" (diameter of the base) in Fig. 12 is typically from 0.5 to 3 mm; and the dimension "k)" (depth) is typically from 0.5 to 3 mm.

Fig. 13 depicts an exemplary arrangement of a pin and a cylindrical concavity upon punching using a positive die 31 having the pins illustrated in Figs. 9 and 10, and a negative die 32 having the cylindrical concavities illustrated in Fig. 12.

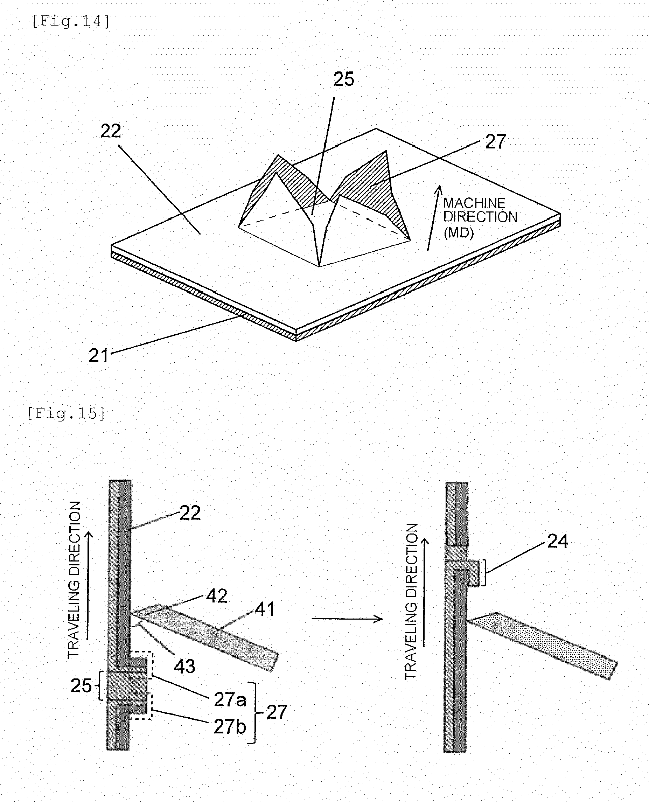

Fig. 14 is a schematic view illustrating shapes of a through-hole and fins formed through punching according to an embodiment using a positive die having the above-exemplified rhombic quadrangular pyramidal pins and a negative die having the cylindrical concavities. In this embodiment, each through-hole has a rhombic shape, and four fins are formed per one through-hole.

A specific example of a technique for forming through-holes by punching using a positive die having the pins is a technique of allowing a laminate having a metallic foil and, present on one side thereof, a thermosetting adhesive layer to pass through between a positive-die roll and a negative-die roll so that the metallic foil side of the laminate is brought into contact with the positive-die roll, in which the positive-die roll is a roll having pins on the surface thereof in a desired arrangement; and the negative-die roll is a roll having concavities (holes or trenches) on the surface thereof.

[Step 2]

In Step 2, the fins (fins formed in Step 1) are folded back to form a terminal. The fins, as being folded back, contribute to a larger area of the terminal. Though not limited, the fins are preferably folded back by a technique of using a squeegee so as to effectively contribute to a larger area of the terminal. The use of a squeegee allows folding back of fins in a large number in one step and allow folding back of them tidily. This allows the conductive thermosetting adhesive tape to have a larger area of the metallic foil exposed from the thermosetting adhesive layer side surface, namely, to have a larger terminal area. In particular, this allows the conductive thermosetting adhesive tape to easily have a larger average terminal area per one through-hole and to thereby have a larger total area of terminals per 30 mm$^2$ of the surface of the thermosetting adhesive layer efficiently.

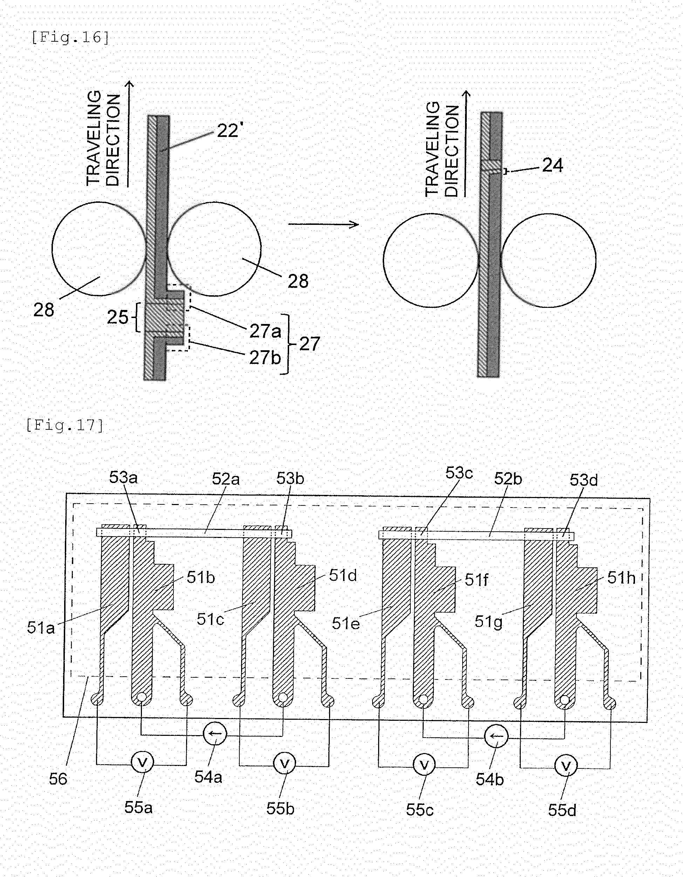

Fig. 15 depicts a schematic view illustrating an embodiment of the production method of the conductive thermosetting adhesive tape "a," in which fins are folded back using a squeegee to form terminals. The term "traveling direction" in Fig. 15 refers to a traveling direction of the laminate, which has through-holes and fins obtained in Step 1; and the same is also applied to Fig. 16. With reference to Fig. 15, a squeegee 41 and a laminate are arranged so that the front edge of the squeegee 41 faces the surface of the thermosetting adhesive layer 22 of the laminate, in which the laminate has through-holes 25 and fins 27 obtained in Step 1. Then the thermosetting adhesive layer 22 is moved with respect to the squeegee 41, and whereby the front edge of the squeegee 41 folds back the fins 27. In this case, of the fins 27, a fin 27a positioned ahead with respect to the through-hole 25 in the traveling direction of the laminate is generally folded back in such a direction to clog the through-hole 25. Thus, the metallic foil of the fin 27a is not exposed from the thermosetting adhesive layer side surface and does not form a terminal. In contrast, a fin 27b positioned behind with respect to the through-hole 25 in the traveling direction of the laminate is folded back in a such a direction as not to clog the through-hole 25. Thus, the metallic foil of the fin 27b is exposed from the thermosetting adhesive layer side surface. Namely, the fin 27b forms a terminal 24. As is described above, the folding back of fins using a squeegee allows the conductive thermosetting adhesive tape to have a larger terminal area per one through-hole efficiently.

Fig. 16 depicts a schematic view illustrating an exemplary formation of terminals in a customary conductive adhesive tape (conductive pressure-sensitive adhesive tape). According to such a customary method, the terminals in the customary conductive adhesive tape are formed by flattening fins 27 of a laminate using press rolls 28 as illustrated in Fig. 16, in which the laminate has a through-hole 25 and the fins 27. In this case, of the fins 27, a fin 27a positioned ahead with respect to the through-hole 25 in the traveling direction of the laminate is generally flattened so that the adhesive layer (pressure-sensitive adhesive layer) covers the metallic foil of the fin 27a. Thus, the metallic foil of the fin 27a is exposed little from the surface of the adhesive layer (pressure-sensitive adhesive layer). In contrast, a fin 27b positioned behind with respect to the through-hole 25 in the traveling direction of the laminate is folded back so as to allow the metallic foil to be exposed from the surface of the adhesive layer (pressure-sensitive adhesive layer) side but is simultaneously flattened by the action of the press rolls. Thus, most of the metallic foil of the fin 27b is covered with the adhesive layer (pressure-sensitive adhesive layer) and, as a result, only a small region of the metallic foil is exposed from the surface of the adhesive layer (pressure-sensitive adhesive layer) side. As is described above, the customary production method fails to provide a large terminal area per one through-hole and thereby gives a conductive adhesive tape which has a total area of terminals present per 30 mm$^2$ of the adhesive layer uncontrollable within the above-specified range and fails to exhibit stable electroconductivity.

A material of the squeegee is not limited, may be any of known or customary ones, and is typified by iron and stainless steels. Among them, the squeegee is preferably made of iron for satisfactory rigidity.

The squeegee is not limited in shape and may be any of squeegees with known or customary shapes. Among them, preferred is a squeegee illustrated in Fig. 15, which has a trapezoid cross section and a sharp front edge (so-called single-beveled squeegee (sword squeegee)), because a squeegee of this type folds back fins easily.

Typically, when the single-beveled squeegee is used as the squeegee, it has an edge angle (knife angle) of preferably from 10° to 80° and more preferably from 20° to 60°; and has a front edge radius (edge R) of preferably from 0.1 to 1 and more preferably from 0.2 to 0.8. As used herein the term "edge angle" refers to an angle of the front edge in a profile of the single-beveled squeegee and refers to, for example, an angle 42 in Fig. 15.

Though not limited, the folding back of the fins is preferably performed so that the front edge of the squeegee is brought into complete (full) contact with the thermosetting adhesive layer surface. The squeegee, when its front edge is brought into complete contact with the thermosetting adhesive layer surface, can fold back the fins from the root and thereby helps the conductive thermosetting adhesive tape "a" to have larger areas of terminals efficiently.

Though not critical, an angle formed between the thermosetting adhesive layer surface and the front edge of the squeegee upon folding back of the fins is preferably 30° to 80° and more preferably from 40° to 80°. As used herein the term "angle formed between the thermosetting adhesive layer surface and the front edge of the squeegee" refers to, for example, an angle 43 in Fig. 15. The fins, when folded back at the angle of 30° or more, can be folded back from the root, and this may help the conductive thermosetting adhesive tape to have a large terminal area efficiently. The fins, when folded back at the angle of less than 30°, may be folded back insufficiently and may not help the conductive thermosetting adhesive tape to have a sufficiently large terminal area, because the front edge of the squeegee may stroke and slip over the front edge of the fin. In contrast, the fins, when folded back at the angle of 80° or less, may not cause breakage of the conductive thermosetting adhesive tape, which breakage may occur upon folding back of the fins.

Though not critical, the rate (speed) of the thermosetting adhesive layer (laminate) to be moved with respect to the squeegee upon folding back of the fins is typically preferably from 1 to 20 m/minute and more preferably from 2 to 10 m/minute. The thermosetting adhesive layer, when moved at a rate of 1 m/minute or more, may contribute to higher productivity. In contrast, the thermosetting adhesive layer, when moved at a rate of 20 m/minute or less, may help the squeegee to fold back the fins stably. Upon folding back of the fins, the thermosetting adhesive layer (laminate) may be moved with respect to the squeegee, or the squeegee may be moved with respect to the thermosetting adhesive layer (laminate). The rate of the squeegee to be moved with respect to the thermosetting adhesive layer (laminate) also preferably falls within the above-specified range.

Step 3

In Step 3, the fins folded back in Step 2 are subjected to press working according to necessity. Step 3, when performed, smoothes the terminals and the thermosetting adhesive layer surface, and this may help the terminals to come into contact with the adherend more easily and may help the conductive thermosetting adhesive tape to have higher adhesiveness to the adherend.

The process of the press working is not limited and may be any of known or customary processes, which are typified by press working processes using rolls or a single plate. Among them, press working using a roll pressing machine is preferred. The thermosetting adhesive layer is preferably protected with a separator upon press working.

Where necessary, the production method of the conductive thermosetting adhesive tape "a" may further include any of additional steps after Step 2 or Step 3, which additional steps are typified by the step of slitting the conductive thermosetting adhesive tape to a suitable product width; and the step of coiling the conductive thermosetting adhesive tape into a roll.

In a preferred embodiment of the conductive thermosetting adhesive tape according to the present invention using a thermosetting adhesive layer as an adhesive layer, the total area of terminals present per 30 $mm^2$ of the surface of the thermosetting adhesive layer is controlled within the range of from 0.1 to 5 $mm^2$. Thus, the resistance ratio as measured in the thermo-cycle test is controlled to 2 times or less, and the conductive thermosetting adhesive tape exhibits stable electroconductivity upon use over a long duration and/or use in severe environments. This is probably mainly for the following reasons (1) and (2), in addition to the reason of a higher bond strength due to the use of a thermosetting adhesive layer. (1) By increasing an area of each terminal, namely, by increasing the average terminal area per one through-hole, the conductive thermosetting adhesive tape can maintain a contact area sufficient to ensure electrical conduction even when the contact area somewhat decreases as a result of use over a long duration and/or use in severe environments. (2) By increasing the number of terminals present per a unit area of the thermosetting adhesive layer, the conductive thermosetting adhesive tape can hold contact points in a number sufficient to ensure electrical conduction even when the contact area decreases as a result of use over a long duration and/or use in severe environments. Particularly in a preferred embodiment of the present invention, a squeegee is used for the formation of terminals. This enables the formation of terminals having such sizes (areas) that cannot be achieved by the customary production method, namely, enables the effect described in (1). Thus, a conductive thermosetting adhesive tape having a total area of terminals controlled within the above-specified range can be efficiently obtained.

In contrast, the customary conductive adhesive tapes fail to have a large area of each terminal, specifically, fail to have an average terminal area per one through-hole of 50,000 $\mu m^2$ or more. In addition, the customary conductive adhesive tapes fail to control the total area of terminals present per 30 $mm^2$ of the adhesive layer to the range of from 0.1 to 5 $mm^2$. This is typically because, if the tapes are to have a large total area of terminals by increasing the number of terminals, an extremely large number of through-holes should be provided, and this causes the conductive adhesive tapes to have a remarkably low strength and remarkably inferior adhesiveness. Accordingly, the customary conductive adhesive tapes have a gradually increasing resistance and thereby fail to exhibit stable electroconductivity, because the contact area between the adherend and terminals is reduced to such an extent as to impede conduction when they are used over a long duration and/or used in severe environments. The reduction in contact area between the adherend and the terminals is a phenomenon which is caused probably in the following manner. Specifically, fine bubbles are formed (or trapped) in the adhesive layer during production of conductive adhesive tapes or upon affixation of the tapes to the adherend; bubbles present in the vicinity of the terminals repeatedly expand and shrink due typically to the change in ambient temperature, and this causes a stress on the contact face between the adherend and the terminals to cause the reduction in contact area.

Additionally, conductive pressure-sensitive adhesive tapes, when used as the customary conductive adhesive tapes, may fail to exhibit stable electroconductivity due to a gradually increasing resistance. This is because such a pressure-sensitive adhesive layer (tacky adhesive layer) has an inferior bond strength to that of a thermosetting adhesive layer, and the conductive pressure-sensitive adhesive tapes may suffer from such a decreased contact area between the adherend and the terminals as to impede conduction therebetween when they are used over a long duration and/or used in severe environments. This occurs particularly when the affixed region has a small size (the tape and the adherend are affixed to each other in a small area).

The conductive thermosetting adhesive tapes according to embodiments of the present invention are advantageously used typically for establishing an electrical conduction between two points separated from each other; and for electromagnetic shielding in electric/electronic appliances and cables. They are particularly advantageously used in applications where such tapes should exhibit stable electroconductivity without increase in resistance upon use in various environments and/or upon use over a long duration. Examples of such applications include grounding of printed circuit boards; grounding of armor shielding cases of electronic appliances; earthing for static protection; and internal wiring of power supplies and electronic appliances which are typified by display devices such as liquid crystal display devices, organic electroluminescence (EL) display devices, plasma display panels (PDPs), and electronic papers; and solar cells.

Examples

The present invention will be illustrated in further detail with reference to several working examples below. It should be noted, however, that these examples are never construed to limit the scope of the present invention.

Table 1 gives the monomer composition of an acrylic polymer, and the content (loading) thereof in a thermosetting adhesive composition or non-thermosetting adhesive composition; the type of an etherified phenolic resin, and the content (loading) thereof in the thermosetting adhesive composition or non-thermosetting adhesive composition; and the type of a crosslinking agent, and the content (loading) thereof in the thermosetting adhesive composition or non-thermosetting adhesive composition. The contents of the acrylic polymer, etherified phenolic resin, tackifier resin, and crosslinking agent are indicated as solids content (part by weight).

Example 1

Production Examples of Acrylic Polymer

In a reactor equipped with a condenser, a nitrogen inlet tube, a thermometer, and a stirrer were placed 0.279 g of 2,2'-azobis{2-[1-(2-hydroxyethyl)-2-imidazolin-2-yl]propane} dihydrochloride (trade name "VA-060" supplied by Wako Pure Chemical Industries, Ltd.) (polymerization initiator) and 100 g of ion-exchanged water, followed by stirring for one hour while introducing nitrogen gas. This was held at 60°C and combined with 400 g of an emulsion of material monomers gradually added dropwise over 3 hours to allow an emulsion polymerization reaction to proceed. The emulsion of material monomers had been prepared by adding 66 parts by weight of butyl acrylate (n-butyl acrylate) (BA), 29 parts by weight of acrylonitrile (AN), 5 parts by weight of acrylic acid (AA), 0.04 part by weight of dodecanethiol (chain-transfer agent), and 2 parts by weight of sodium lauryl polyoxyethylene ether sulfate (emulsifier) to 41 parts by weight of ion-exchanged water, followed by emulsification. After the completion of dropwise addition of the emulsion of material monomers, the resulting mixture was aged by holding at the same temperature (60°C) for further 3 hours. An acrylic polymer having a weight-average molecular weight of $50 \times 10^4$ was obtained by drying the aqueous dispersion (emulsion) of the acrylic polymer polymerized in the above manner.

Preparation Example of Thermosetting Adhesive Composition

A thermosetting adhesive composition (A) as a solution was prepared by mixing a solution of 100 parts by weight of the above-prepared acrylic polymer in ethyl acetate with a solution of 10 parts by weight (solids content) of an etherified phenolic resin (trade name "CKS-3898" supplied by Showa Denko K.K.) in butanol with stirring. The above-prepared acrylic polymer is a copolymer formed from, as monomer components, 66 parts by weight of butyl acrylate (BA), 29 parts by weight of acrylonitrile (AN), and 5 parts by weight of acrylic acid (AA).

Production Example of Thermosetting Adhesive Tape Roll

The thermosetting adhesive composition (A) was applied to a silicone-coated release paper so as to have a dry thickness of 25 $\mu$m and dried at 100°C for 3 minutes to form a thermosetting adhesive layer (25 $\mu$m thick) thereon. The thermosetting adhesive layer was then affixed to a tin-coated copper foil (tin-plated copper foil) having a thickness of 35 $\mu$m.
Next, this article was wound into a roll and thereby yielded a thermosetting adhesive tape roll having a structure of "(tin-coated copper foil)/(thermosetting adhesive layer)/(release paper)."

Production Example of Conductive Thermosetting Adhesive Tape

The thermosetting adhesive tape was unreeled from the above-prepared thermosetting adhesive tape roll and punched by passing through between a positive-die roll and a negative-die roll so that the metallic foil side of the thermosetting adhesive tape come in contact with the positive-die roll. Thus, there were formed through-holes and, on the thermosetting adhesive layer side surface, fins (burrs) of the metallic foil. The positive-die roll bears, on its surface, pins each having the shape illustrated in Figs. 9 and 10 (where "c" = 1.0427 mm, "d" = 1.8061 mm, "e" = 60°, "f" = 1.2 mm, and "g" = 0.1 mm) being arranged in the pattern illustrated in Fig. 11 (where "h" = 2.598 mm and "i" = 1.5 mm). The negative-die roll has, in its surface, cylindrical concavities illustrated in Fig. 12 each having a diameter "j" of 1.6 mm and a depth "k" of 1.4 mm.
Next, the release paper was removed, and a squeegee (material: iron (FK4), edge angle: 45°, edge R (edge radius): 0.5) and the thermosetting adhesive tape were arranged as illustrated in Fig. 15 so that the angle (the angle 43 in Fig. 15) formed between the thermosetting adhesive layer surface and the front edge of the squeegee be 20° and so that the thermosetting adhesive layer surface be in contact with the front edge of the squeegee, namely, the front edge of the squeegee was held against the thermosetting adhesive layer surface. Then the thermosetting adhesive layer was moved (slid) at a rate of 1 m/minute, and the fins were thereby folded back.

Next, a separator was applied to the thermosetting adhesive layer surface, and the article was allowed to pass through between press rolls to thereby perform the lamination of the separator and to perform press working so that the folded-back fins and the thermosetting adhesive layer become smooth. Thus, a conductive thermosetting adhesive tape having terminals (exposed metal parts) on the thermosetting adhesive layer side surface (conductive thermosetting adhesive tape having through-holes) was obtained.

Example 2

A conductive thermosetting adhesive tape having terminals (exposed metal parts) on the thermosetting adhesive layer side surface (conductive thermosetting adhesive tape having through-holes) was obtained by the procedure of Example 1, except for forming the thermosetting adhesive layer to a thickness of 35 $\mu$m, instead of 25 $\mu$m, in the production example of thermosetting adhesive tape roll in Example 1.

Example 3

A conductive thermosetting adhesive tape having terminals (exposed metal parts) on the thermosetting adhesive layer side surface (conductive thermosetting adhesive tape having through-holes) was obtained by the procedure of Example 1, except for using the etherified phenolic resin (trade name "CKS-3898" supplied by Showa Denko K.K.) in an amount of 80 parts by weight (solids content), instead of 10 parts by weight in the preparation example of thermosetting adhesive composition in Example 1; and except for forming the thermosetting adhesive layer to a thickness of 30 $\mu$m, instead of 25 $\mu$m, in the production example of thermosetting adhesive tape roll in Example 1.

Example 4

A conductive thermosetting adhesive tape having terminals (exposed metal parts) on the thermosetting adhesive layer side surface (conductive thermosetting adhesive tape having through-holes) was obtained by the procedure of Example 1, except for using the etherified phenolic resin (trade name "CKS-3898" supplied by Showa Denko K.K.) in an amount of 60 parts by weight (solids content), instead of 10 parts by weight in the preparation example of thermosetting adhesive composition in Example 1; and except for forming the thermosetting adhesive layer to a thickness of 30 $\mu$m, instead of 25 $\mu$m, in the production example of thermosetting adhesive tape roll in Example 1.

Example 5

A conductive thermosetting adhesive tape having terminals (exposed metal parts) on the thermosetting adhesive layer side surface (conductive thermosetting adhesive tape having through-holes) was obtained by the procedure of Example 1, except for using the etherified phenolic resin (trade name "CKS-3898" supplied by Showa Denko K.K.) in an amount of 100 parts by weight (solids content), instead of 10 parts by weight, in the preparation example of thermosetting adhesive composition in Example 1; and except for forming the thermosetting adhesive layer to a thickness of 30 $\mu$m, instead of 25 $\mu$m, in the production example of thermosetting adhesive tape roll in Example 1.

Example 6

A conductive thermosetting adhesive tape having terminals (exposed metal parts) on the thermosetting adhesive layer side surface (conductive thermosetting adhesive tape having through-holes) was obtained by the procedure of Example 1, except for using, in the preparation example of thermosetting adhesive composition in Example 1, butyl acrylate (n-butyl acrylate) (BA) in an amount of 91 parts by weight instead of 66 parts by weight, acrylonitrile (AN) in an amount of 5 parts by weight instead of 29 parts by weight, acrylic acid (AA) in an amount of 4 parts by weight instead of 5 parts by weight, and the etherified phenolic resin (trade name "CKS-3898" supplied by Showa Denko K.K.) in an amount of 100 parts by weight (solids content) instead of 10 parts by weight; and except for forming the thermosetting adhesive layer to a thickness of 30 $\mu$m, instead of 25 $\mu$m, in the production example of thermosetting adhesive tape roll in Example 1.

Example 7

A conductive thermosetting adhesive tape having terminals (exposed metal parts) on the thermosetting adhesive layer side surface (conductive thermosetting adhesive tape having through-holes) was obtained by the procedure of Example 1, except for using, in the preparation example of thermosetting adhesive composition in Example 1, butyl acrylate (n-butyl acrylate) (BA) in an amount of 72 parts by weight instead of 66 parts by weight, acrylonitrile (AN) in an amount of 27 parts by weight instead of 29 parts by weight, acrylic acid (AA) in an amount of 1 part by weight instead of 5 parts by weight, and the etherified phenolic resin (trade name "CKS-3898" supplied by Showa Denko K.K.) in an amount of 100 parts by weight (solids content) instead of 10 parts by weight; and except for forming the thermosetting adhesive layer to a thickness of 30 $\mu$m, instead of 25 $\mu$m, in the production example of thermosetting adhesive tape roll in Example 1.

Example 8

A conductive thermosetting adhesive tape having terminals (exposed metal parts) on the thermosetting adhesive layer side surface (conductive thermosetting adhesive tape having through-holes) was obtained by the procedure of Example 1, except for using, in the preparation example of thermosetting adhesive composition in Example 1, butyl acrylate (n-butyl acrylate) (BA) in an amount of 80 parts by weight instead of 66 parts by weight, acrylonitrile (AN) in an amount of 14 parts by weight instead of 29 parts by weight, acrylic acid (AA) in an amount of 6 parts by weight instead of 5 parts by weight, and the etherified phenolic resin (trade name "CKS-3898" supplied by Showa Denko K.K.) in an amount of 100 parts by weight (solids content) instead of 10 parts by weight; and except for forming the thermosetting adhesive layer to a thickness of 30 $\mu$m, instead of 25 $\mu$m, in the production example of thermosetting adhesive tape roll in Example 1.

Comparative Example 1

Production Example of Acrylic Polymer

In a reactor equipped with a condenser, a nitrogen inlet tube, a thermometer, and a stirrer were placed 0.279 g of 2,2'-azobis{2-[1-(2-hydroxyethyl)-2-imidazolin-2-yl]propane} dihydrochloride (trade name "VA-060'" supplied by Wako Pure Chemical Industries, Ltd.) (polymerization initiator) and 100 g of ion-exchanged water, followed by stirring for one hour while introducing nitrogen gas. This was held at 60°C and combined with 400 g of an emulsion of material monomers gradually added dropwise over 3 hours to allow an emulsion polymerization reaction to proceed. The emulsion of material monomers had been prepared by adding 70 parts by weight of butyl acrylate (n-butyl acrylate) (BA), 30 parts by weight of 2-ethylhexyl acrylate (2EHA), 3 parts by weight of acrylic acid (AA), 0.05 part by weight of hydroxyethyl acrylate (HEA), 0.04 part by weight of dodecanethiol (chain-transfer agent), and 2 parts by weight of sodium lauryl polyoxyethylene ether sulfate (emulsifier) to 41 parts by weight of ion-exchanged water, followed by emulsification. After the completion of dropwise addition of the emulsion of material monomers, the resulting mixture was aged by holding at the same temperature (60°C) for further 3 hours. An acrylic polymer having a weight-average molecular weight of 50x $10^4$ was obtained by drying the aqueous dispersion (emulsion) of the acrylic polymer polymerized in the above manner.

Preparation Example of Non-thermosetting Adhesive Composition (Pressure-sensitive Adhesive Composition)

A non-thermosetting adhesive composition (solution) was prepared by mixing with stirring a solution of 100 parts by weight of the above-prepared acrylic polymer in ethyl acetate with 30 parts by weight (solids content) of a tackifier resin (trade name "PENSEL D-125" supplied by Arakawa Chemical Industries, Ltd., rosin ester) and 2 parts by weight (solids content) of a crosslinking agent (trade name "CORONATE L" supplied by Nippon Polyurethane Industry Co., Ltd., isocyanate compound). The acrylic polymer is a copolymer formed from 70 parts by weight of butyl acrylate (BA), 30 parts by weight of 2-ethylhexyl acrylate (2EHA), 3 parts by weight of acrylic acid (AA), and 0.05 part by weight of hydroxyethyl acrylate (HEA) as monomer components.
The non-thermosetting adhesive composition obtained in the preparation example of non-thermosetting adhesive composition was used hereinafter as a "non-thermosetting adhesive composition (A)."

Production Example of Non-thermosetting Adhesive Tape Roll

The non-thermosetting adhesive composition (A) was applied to a silicone-coated release paper to a dry thickness of 45 $\mu$m, and this was dried in an oven at 130°C for 3 minutes to form a non-thermosetting adhesive layer (pressure-sensitive adhesive layer) thereon. A tin-coated copper foil (tin-plated copper foil) having a thickness of 35 $\mu$m was applied to the surface of the non-thermosetting adhesive layer, and this was wound into a roll and thereby yielded a non-thermosetting adhesive tape roll having a structure of "(tin-coated copper foil)/(pressure-sensitive adhesive layer)/(release paper)."

Production Example of Conductive Non-thermosetting Adhesive Tape (Conductive Pressure-sensitive Adhesive Tape)

A conductive non-thermosetting adhesive tape having terminals (exposed metal parts) on a non-thermosetting adhesive layer side surface [conductive non-thermosetting adhesive tape (conductive pressure-sensitive adhesive tape) having through-holes] was obtained by the procedure of the production example of conductive thermosetting adhesive tape in Example 1, except for using the non-thermosetting adhesive tape roll instead of the thermosetting adhesive tape roll.

Comparative Example 2

A conductive non-thermosetting adhesive tape having terminals (exposed metal parts) on the non-thermosetting adhesive layer side surface [conductive non-thermosetting adhesive tape (conductive pressure-sensitive adhesive tape) having through-holes] was obtained by the procedure of Comparative Example 1, except for using, in the preparation example of non-thermosetting adhesive composition in Comparative Example 1, butyl acrylate (n-butyl acrylate) (BA) in an amount of 100 parts by weight instead of 70 parts by weight, 2-ethylhexyl acrylate (2EHA) in an amount of 0 part by weight instead of 30 parts by weight, acrylic acid (AA) in an amount of 5 parts by weight instead of 3 parts by weight, hydroxyethyl acrylate (HEA) in an amount of 0 part by weight instead of 0.05 part by weight, and the tackifier resin (trade name "PENSEL D-125" supplied by Arakawa Chemical Industries, Ltd., rosin ester) in an amount of 0 part by weight (solids contents) instead of 35 parts by weight; and except for forming the non-thermosetting adhesive layer to a thickness of 30 $\mu$m, instead of 45 $\mu$m, in the production example of non-thermosetting adhesive tape roll in Comparative Example 1.

[Evaluations]

The conductive adhesive tapes (conductive thermosetting adhesive tapes or conductive non-thermosetting adhesive tapes) obtained in the examples and comparative examples were examined and evaluated on the following properties according to the following methods. The results are given in Table 1.

(1) Resistance (Thermo-cycle Test)

Preparation of Testing substrate (Fig. 17)

A sample conductive adhesive tape was cut to a size of 2 mm wide by 60 mm long, from which the separator was removed, and thereby yielded a conductive adhesive tape specimen.
The conductive adhesive tape specimen was laminated onto a glass epoxy substrate (thickness: 1.6 mm) at 130°C and bonded thereto through thermocompression bonding at 160°C and 2 MPa for 120 seconds so that affixed regions 53a to 53d of the conductive adhesive tape to the conductor traces each have a size of 2 mm wide by 3 mm long (area: 6 mm$^2$). The glass epoxy substrate had silver-plated conductor traces 51a to 51h in the arrangement illustrated in Fig. 17, and the conductor traces were each composed of 18 $\mu$m of Cu, 3 to 7 $\mu$m of Ni, 0.03 $\mu$m of Au, and 5 $\mu$m of Ag arranged in this order.
The conductive adhesive tape specimen in Example 3 was affixed to the glass epoxy substrate through lamination at 130°C alone without thermocompression bonding at 160°C and 2 MPa for 120 seconds.
One terminal was present in each of the affixed regions (affixed regions each having a size of 2 mm wide by 3 mm long (area: 6 mm$^2$)).
Next, constant-current power supplies (54a and 54b) and electrometers (55a to 55d) were connected to the conductor traces 51a to 51h through soldering using lead wires.
An electric circuit in the testing substrate illustrated in Fig. 17 corresponds to an electric circuit having an arrangement of two pieces of the electric circuit in the testing substrate illustrated in Fig. 1.

Preparation of Resistance Testing Sample

A thermosetting EVA film (thickness: 0.6 mm) having a vinyl acetate content of 28% was laid on a region 56 in the testing substrate illustrated in Fig. 17, a glass plate (thickness: 3.2 mm) was further laid thereon, and thereby yielded a laminate having a structure of "(testing substrate)/(EVA film)/(glass plate)." The laminate was placed in a vacuum pressing machine, in which evacuation was initially performed at 150°C for 40 seconds without pressing, the laminate in the state with evacuation was then pressed at a temperature of 150°C and a pressure of 0.1 MPa for 400 seconds, but the evacuation was completed 400 seconds from the beginning of the evacuation. The laminate was then retrieved from the vacuum pressing machine and heated at 150°C for 30 minutes to thermally cure EVA and, in the examples, the thermosetting adhesive layer. Thus, a series of resistance-testing samples was obtained.

Setting of in-chamber ambient temperature

Using trade name "PL-3K" (supplied by ESPEC Corporation) as a chamber, a preset in-chamber temperature (thermo-cycle condition) was set as follows. During the repeat of cooling and heating under the conditions below, the humidity (relative humidity) in the chamber was not specifically controlled, and the relative humidity in the chamber was 50% at the start.
The temperature was 25°C at the start, lowered from 25°C to -40°C at a rate of 100°C/hour, and held at -40°C for 10 minutes. Next, the temperature was raised from -40°C to 85°C at a rate of 100°C/hour, and held at 85°C for 10 minutes. Then, the temperature was lowered to 25°C at a rate of 100°C/hour. Such thermo-cycle condition was regarded as one cycle, and repeated 200 times or 400 times.
Fig. 5 illustrates exemplary profiles of the in-chamber temperature (ambient temperature) in the chamber (thermostatic chamber) and of surface temperature of the conductive adhesive tape when the in-chamber temperature is controlled according to the temperature setting (thermo-cycle condition).

Measurement of Resistance

While applying a constant current of 2A to the resistance-testing sample by the constant-current power supplies (54a and 54b) (namely, while applying a constant current of 2 A to the affixed regions 53a to 53d in Fig. 17), the sample was placed in the chamber controlled at an in-chamber ambient temperature of 25°C, and repeatedly cooled and heated in accordance with the thermo-cycle condition. During the cycles, the voltage was continuously measured (sampling interval: once/1 minute) with the electrometers (55a to 55d) to continuously collect the resistance (contact resistance) of each of the affixed regions 53a to 53d. Thus, the maximum resistance in the first cycle (initial resistance), the maximum resistance in the 200th cycle, and the maximum resistance in the 400th cycle were measured to determine the resistance ratios (200-cycle resistance and 400-cycle resistance) by calculation. Table 1 gives the averages (N=4) of the resistance and the resistance ratio each measured at the affixed regions 53a to 53d.

(2) Terminal Areas (Total Area of Terminals and Average Terminal Area)

Each of the conductive adhesive tapes obtained in the examples and the comparative examples was cut out to a size of 6 mm long by 5 mm wide (area: 30 mm$^2$), from which the separator was removed, and the residual part was used hereinafter as a test portion.
The adhesive layer side surface of the test portion was observed with a digital microscope (product number "VHX-600" supplied by Keyence Corporation) at a magnification of 200 times (using "VH-220" lens), by which a picture (image in the plane of projection) of a terminal was observed. Next, a region of the terminal in the picture was specified in a measurement mode, the area of the region was measured, and thereby the area of the terminal was measured. Likewise, areas of all terminals present in the test portion were measured, summed up, and thereby gave a total area of terminals present per 30 mm$^2$ of the adhesive layer.
In addition, the number of through-holes present in the test portion was counted, and the above-determined total area of terminals present per 30 mm$^2$ of the adhesive layer was divided by the number of through-holes to determined the average terminal area per one through-hole.

(3) Bond Strength

Preparation of Sheet Sample

A sheet-form sample 20 mm wide by 100 mm long was cut out from each of the thermosetting adhesive tape rolls obtained in the examples and having a structure of "(tin-coated copper foil)/(thermosetting adhesive layer)/(release paper)" and each of the non-thermosetting adhesive tape rolls obtained in the comparative examples and having a structure of "(tin-coated copper foil)/(pressure-sensitive adhesive layer)/(release paper)." From the sheet-form sample, the separator was removed, and the residual part was used hereinafter as a sheet sample.

Bond Strength Before Curing (Initial Bond Strength)

The sheet sample was affixed to an aluminum plate 50 mm wide by 100 mm long through one reciprocating movement of a 2-kg roller at a roller speed of 5 mm/second and thereby yielded an assembled specimen. Next, the assembled specimen was left stand at an ambient temperature of 23°C for 30 minutes. Thereafter the sheet sample in the assembled specimen was peeled off from the aluminum plate at an ambient temperature of 23°C and relative humidity of 50% using a tensile tester (supplied by Minebea Co., Ltd.) at a peel angle of 90° and a tensile speed of 300 mm/minute to measure a bond strength (90° peel strength) (N/20 mm).

Bond Strength After Curing

The sheet sample was affixed to an aluminum plate 100 mm wide by 100 mm long (100-mm square aluminum plate) through pressing with a hand roller and bonded thereto through thermocompression bonding (heating and pressing) at 150°C and 0.1 MPa for 5 minutes. The resulting article was further subjected to a heating treatment (curing, heat curing treatment) at 150°C for 30 minutes and thereby yielded a specimen. Next, the specimen was left stand at an ambient temperature of 23°C for 30 minutes. Thereafter the sheet sample in the specimen was peeled off from the aluminum plate at an ambient temperature of 23°C and relative humidity of 50% using a tensile tester (supplied by Minebea Co., Ltd.) at a peel angle of 180° and a tensile speed of 50 mm/minute to measure a bond strength (180° peel strength) (N/20 mm).
TABLE 1

| | | | Example 1 | Example 2 | Example 3 | Example 4 | Example 5 | Example 6 | Example 7 | Example 8 | Com. Ex. 1 | Com. Ex. 2 ' |
|---|---|---|---|---|---|---|---|---|---|---|---|---|
| Acrylic polymer | Content (part by weight) | | 100 | 100 | 100 | 100 | 100 | 100 | 100 | 100 | 100 | 100 |
| | Monomer composition (part by weight) | BA | 66 | 66 | 66 | 66 | 66 | 91 | 72 | 80 | 70 | 100 |
| | | 2EHA | - | - | - | - | - | - | - | - | 30 | - |
| | | AN | 29 | 29 | 29 | 29 | 29 | 5 | 27 | 14 | - | - |
| | | AA | 5 | 5 | 5 | 5 | 5 | 4 | 1 | 6 | 3 | 5 |
| | | HEA | - | - | - | - | - | - | - | - | 0.05 | - |
| Etherified phenolic resin | | Type | CKS-3898 | CKS-3898 | CKS-3898 | CKS-3898 | CKS-3898 | CKS-3898 | CKS-3898 | CKS-3898 | - | - |
| | | Content (part by weight) | 10 | 10 | 80 | 60 | 100 | 100 | 100 | 100 | - | - |
| Tackifier resin | | Type | - | - | - | - | - | - | - | - | PENSEL D-125 | - |
| | | Content (part by weight) | - | - | - | - | - | - | - | - | 35 | - |
| Crosslinking agent | | Type | - | - | - | - | - | - | - | - | C/L | C/L |
| | | Content (part by weight) | - | - | - | - | - | - | - | - | 2 | 2 |

EP 2 537 905 A2

| | Example 1 | Example 2 | Example 3 | Example 4 | Example 5 | Example 6 | Example 7 | Example 8 | Com. Ex. 1 | Com. Ex. 2' |
|---|---|---|---|---|---|---|---|---|---|---|
| Thickness of adhesive layer (pm) | 25 | 35 | 30 | 60 | 30 | 30 | 30 | 30 | 45 | 30 |
| Type of metallic foil | tin-coated copper foil | tin-coated copper foil | tin-coated copper foil | tin-coated copper foil | tin-coated copper foil | tin-coated copper foil | tin-coated copper foil | tin-coated copper foil | tin-coated copper foil | tin-coated copper foil |
| Thickness of metallic foil ($\mu$m) | 35 | 35 | 35 | 35 | 35 | 35 | 35 | 35 | 35 | 35 |
| Initial resistance ($\Omega$) | 0.0057 | 0.0049 | 0.0047 | 0.0052 | 0.0054 | 0.0062 | 0.0058 | 0.0057 | 0.006 | 0.006 |
| 200th-cycle resistance ($\Omega$) | 0.0066 | 0.0063 | 0.0050 | 0.0060 | 0.0054 | 0.0069 | 0.0061 | 0.0062 | 0.012 | 0.014 |
| 400th-cycle resistance ($\Omega$) | 0.0065 | 0.0047 | 0.0049 | 0.0059 | 0.0053 | 0.0081 | 0.0061 | 0.0066 | 0.014 | 0.018 |
| Resistance ratio (200-cycle) (time) | 1.2 | 1.3 | 1.1 | 1.2 | 1.0 | 1.1 | 1.1 | 1.1 | 2.0 | 2.3 |
| Resistance ratio (400-cycle) (time) | 1.1 | 1.0 | 1.0 | 1.1 | 1.0 | 1.3 | 1.1 | 1.2 | 2.3 | 3.0 |
| Type of electrical conduction | throughhole | throughhole | throughhole | throughhole | throughhole | throughhole | throughhole | throughhole | throughhole | throughhole |
| Total area of terminals (mm$^2$/30 mm$^2$) | 0.2 | 0.2 | 0.2 | 0.2 | 0.2 | 0.2 | 0.2 | 0.2 | 0.2 | 0.2 |
| Average terminal area ($\mu$m$^2$) | $2 \times 10^5$ | $2 \times 10^5$ | $2 \times 10^5$ | $2 \times 10^5$ | $2 \times 10^5$ | $2 \times 10^5$ | $2 \times 10^5$ | $2 \times 10^5$ | $2 \times 10^5$ | $2 \times 10^5$ |
| Number of through-hole (per 30 mm$^2$) | 1 | 1 | 1 | 1 | 1 | 1 | 1 | 1 | 1 | 1 |
| Bond strength before curing (initial bond strength) (N/20 mm) | 4.0 | 4.5 | 5.4 | 4.7 | 4.7 | 7.4 | 3.5 | 9.69 | 14.7 | 12.0 |
| Bond strength after curing (N/20 mm) | 20 | 20 | 25 | 27 | 23 | 20 | 16.24 | 20.6 | - | - |

EP 2 537 905 A2

In Table 1, "CKS-3898" represents the "etherified phenolic resin (trade name "CKS-3898" supplied by Showa Denko K.K.), "PENSEL D-125" represents the "tackifier resin (trade name "PENSEL D-125" supplied by Arakawa Chemical Industries, Ltd.)," and "C/L" represents the "crosslinking agent (trade name "CORONATE L" supplied by Nippon Polyurethane Industry Co., Ltd.)."

The bond strength after curing in Comparative Example 1 and Comparative Example 2 was immeasurable. This is because the samples according to Comparative Example 1 and Comparative Example 2 are conductive non-thermosetting adhesive tapes which are not cured by the action of heat.

As is demonstrated by data in Table 1, the conductive thermosetting adhesive tapes according to the present invention (Examples 1 to 8) had a low resistance ratio even when applied in a small area and exhibited stable electroconductivity all the time.

In contrast, the conductive non-thermosetting adhesive tape (conductive pressure-sensitive adhesive tape) according to Comparative Example 1 failed to exhibit stable electroconductivity all the time when applied in a small area.

The conductive thermosetting adhesive tape according to Example 3 could be affixed only by lamination at 130°C without thermocompression bonding at 160°C and 2 MPa for 120 seconds in " (1) Resistance (Thermo-cycle Test) (Preparation of Testing substrate)," because the tape employs a large amount of the etherified phenolic resin, and the thermosetting adhesive layer before curing has tack.

While preferred embodiments of the present invention have been described using specific terms, such description is for illustrated purposes only, and it is to be understood that various changes and modifications may be made without departing from the spirit and scope of the present invention as defined in the appended claims.

Reference Signs List

11a to 11d silver-plated conductor trace (conductor trace)
12 conductive thermosetting adhesive tape
13 affixed region
14 constant-current power supply
15 electrometer
16 region (sealing region) to be sealed with ethylene-vinyl acetate copolymer (EVA)
17 resistance (contact resistance) corresponding to affixed region
18a glass epoxy substrate
18b glass plate
19 cured article of ethylene-vinyl acetate copolymer (EVA)
21 metallic foil
22 thermosetting adhesive layer
22' pressure-sensitive adhesive layer
23 conductive thermosetting adhesive tape
24 terminal
25 through-hole
26 conducting part
27 fin (burr)
27a fin positioned ahead with respect to through-hole 25 in traveling direction of thermosetting adhesive layer
27b fin positioned behind with respect to through-hole 25 in traveling direction of thermosetting adhesive layer
28 press roll
31 positive die
32 negative die
41 squeegee (single-beveled squeegee)
42 edge angle
43 angle formed between thermosetting adhesive layer surface and front edge of squeegee
51a to 51h silver-plated conductor trace (conductor trace)
52a, 52b conductive thermosetting adhesive tape (conductive thermosetting adhesive tape specimen)
53a to 53d affixed region (affixed region between conductive thermosetting adhesive tape and conductor trace)
54a, 54b constant-current power supply
55a to 55d electrometer
56 region (sealing region) to be sealed with ethylene-vinyl acetate copolymer (EVA)

**Claims**

1. A conductive thermosetting adhesive tape comprising:

   a metallic foil; and
   a thermosetting adhesive layer present on or above one side of the metallic foil,
   the thermosetting adhesive layer having a bond strength before curing of 2 N/20 mm or more, and
   the thermosetting adhesive layer having a bond strength after curing of 10 N/20 mm or more.

2. The conductive thermosetting adhesive tape according to claim 1,
   a terminal or terminals exposed from a surface of the tape on the thermosetting adhesive layer side,
   wherein the conductive thermosetting adhesive tape has a total area of the terminal or terminals present per 30 $mm^2$ of the surface of the thermosetting adhesive layer of from 0.1 to 5 $mm^2$.

3. The conductive thermosetting adhesive tape according to claim 2, wherein the terminal or terminals are a terminal or terminals each formed by boring a through-hole from the metallic foil side to form a fin or fins of the metallic foil on a surface of the tape on the thermosetting adhesive layer side, and folding back the fin or fins.

4. The conductive thermosetting adhesive tape according to claim 3, wherein the conductive thermosetting adhesive tape has an average area of the terminal or terminals of from 50,000 to 500,000 $\mu m^2$ per one through-hole.

5. The conductive thermosetting adhesive tape according to any one of claims 1 to 4, wherein the thermosetting adhesive layer is a thermosetting adhesive layer formed from a thermosetting adhesive composition containing an acrylic polymer (X) as a principal component and further containing an etherified phenolic resin (Y).

6. The conductive thermosetting adhesive tape according to claim 5, wherein the acrylic polymer (X) is an acrylic polymer comprising, as an essential monomer component, a (meth)acrylic alkyl ester (a) whose alkyl moiety being a linear or branched-chain alkyl group having 1 to 14 carbon atoms.

7. The conductive thermosetting adhesive tape according to one of claims 5 and 6, wherein the acrylic polymer (X) is an acrylic polymer further comprising a cyano-containing monomer (b) and a carboxyl-containing monomer (c) as essential monomer components.

8. The conductive thermosetting adhesive tape according to any one of claims 1 to 7, wherein the thermosetting adhesive layer is a thermosetting adhesive layer formed from a thermosetting adhesive composition containing a conductive filler.

9. A conductive thermosetting adhesive tape comprising:

   a metallic foil;
   a thermosetting adhesive layer present on or above one side of the metallic foil; and
   a terminal or terminals exposed from a surface of the tape on the thermosetting adhesive layer side, and
   the conductive thermosetting adhesive tape having a total area of the terminal or terminals present per 30 $mm^2$ of the surface of the thermosetting adhesive layer of from 0.1 to 5 $mm^2$.

10. The conductive thermosetting adhesive tape according to claim 9, wherein the terminal or terminals are a terminal or terminals formed by boring a through-hole from the metallic foil side to form a fin or fins of the metallic foil on a surface of the tape on the thermosetting adhesive layer side, and folding back the fin or fins.

11. The conductive thermosetting adhesive tape according to claim 10, wherein the conductive thermosetting adhesive tape has an average area of the terminal or terminals of from 50,000 to 500,000 $\mu m^2$ per one through-hole.

12. The conductive thermosetting adhesive tape according to any one of claims 9 to 11, wherein the thermosetting adhesive layer is a thermosetting adhesive layer formed from a thermosetting adhesive composition containing an acrylic polymer (X) as a principal component and further containing an etherified phenolic resin (Y).

13. The conductive thermosetting adhesive tape according to claim 12, wherein the acrylic polymer (X) is an acrylic polymer comprising, as an essential monomer component, a (meth)acrylic alkyl ester (a) whose alkyl moiety being a linear or branched-chain alkyl group having 1 to 14 carbon atoms.

14. The conductive thermosetting adhesive tape according to one of claims 12 and 13, wherein the acrylic polymer (X) is an acrylic polymer further comprising a cyano-containing monomer (b) and a carboxyl-containing monomer (c) as essential monomer components.

15. The conductive thermosetting adhesive tape according to any one of claims 9 to 14, wherein the thermosetting adhesive layer is a thermosetting adhesive layer formed from a thermosetting adhesive composition containing a conductive filler.

[Fig.1]

[Fig.2]

[Fig.3]

[Fig.4]

[Fig.5]

— IN-CHAMBER
TEMPERATURE

— TAPE
TEMPERATURE

[Fig.6]

TRANSVERSE DIRECTION (TD)

[Fig.7]

MACHINE DIRECTION (MD)

[Fig.8]

TRANSVERSE DIRECTION (TD)

[Fig.9]

[Fig.10]

[Fig.11]

[Fig.12]

j (diameter)

[Fig.13]

67.581°

31

0.0643mm

0.2mm

1.2mm

32

1.4mm

φ 1.6mm

TRANSVERSE DIRECTION (TD)

[Fig.14]

[Fig.15]

[Fig.16]

[Fig.17]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S6346980 B
- JP H08185714 B
- JP H10292155 B
- JP H11302615 B
- JP 2004263030 A
- JP 2005277145 A